(19) **Europäisches Patentamt / European Patent Office / Office européen des brevets**

(11) **EP 4 708 251 A1**

(12) **EUROPEAN PATENT APPLICATION**

(43) Date of publication:
**11.03.2026 Bulletin 2026/11**

(21) Application number: **25197986.0**

(22) Date of filing: **25.08.2025**

(51) International Patent Classification (IPC):
**G08G 1/16** *(2006.01)*   **B60Q 9/00** *(2006.01)*
**B60W 30/095** *(2012.01)*

(52) Cooperative Patent Classification (CPC):
**G08G 1/162; B60Q 9/008; B60W 30/095;**
**G08G 1/161; G08G 1/166; G08G 1/167**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **09.09.2024 JP 2024154705**

(71) Applicant: **Suzuki Motor Corporation**
**Shizuoka 432-8611 (JP)**

(72) Inventors:
• **OGASAWARA, Shigeru**
  **432-8611 HAMAMATSU-SHI (JP)**
• **OKADA, Toru**
  **432-8611 HAMAMATSU-SHI (JP)**
• **UMEZANE, Yuichi**
  **432-8611 HAMAMATSU-SHI (JP)**

(74) Representative: **Plasseraud IP**
**104 Rue de Richelieu**
**CS92104**
**75080 Paris Cedex 02 (FR)**

(54) **VEHICLE NOTIFICATION SYSTEM**

(57)    A vehicle notification system 1 displays information VBT indicating a type of a straight traveling vehicle VB and information VBTD indicating a traveling direction of the straight traveling vehicle VB on a display 141a of a HMI device 131a in a right turning vehicle VA and displays information VAT indicating a type of the right turning vehicle VA and information VATD indicating a traveling direction of the right turning vehicle VA on the display 141b in the straight traveling vehicle VB, on the basis of right turning vehicle information related to the right turning vehicle VA and straight traveling vehicle information related to the straight traveling vehicle VB that are shared between the right turning vehicle VA and the straight traveling vehicle VB via communication between the right turning vehicle VA and the straight traveling vehicle VB at a time of the notification issuance.

FIG. 15

**Description**

BACKGROUND OF THE INVENTION

Field of the Invention

Embodiments of the present invention relate to a vehicle notification system.

Description of the Related Art

For the purpose of assisting driving in situations where right turn is made at intersections on left-hand traffic roads, there is a technology of recognizing operation statuses of other traffic participants including oncoming vehicles moving straight ahead toward intersections in opposite lanes and providing an instruction for a right turn timing that allows a driver to avoid collisions against the oncoming vehicles to the driver.

Here, detection of traffic participants is typically performed by in-vehicle sensors such as cameras or radars.

[Patent Document 1] JP 2009-265832 A

However, it is difficult for in-vehicle sensors to detect traffic participants who are present at blind angles such as behind obstacles.

Specifically, in a case where there is another vehicle traveling side by side with an oncoming vehicle in the same lane, or in a case where another vehicle is stopping to wait for turning right in front of the oncoming vehicle, the vehicle may become an obstacle, and the oncoming vehicle may be present at a blind angle of the vehicle, which may make it difficult to detect the oncoming vehicle depending on an in-vehicle sensor equipped in the right turning vehicle.

In a case where the vehicle that may become an obstacle is a large vehicle, the blind angle becomes wider, which makes it more difficult to detect the oncoming vehicle.

In driving assistance, notifications are implemented to inform drivers of occurrence of various events. Types of notifications for the drivers include, for example, visual notifications through display of text and/or illustration on displays, auditory notifications by sound and/or voice using speakers, and tactile notifications by vibrations of steering wheels.

However, auditory notifications have drawbacks that it is difficult to deliver what is going on to the drivers with sound and it may take too long for the drivers to understand what is going on with voice. Additionally, tactile notifications have also a drawback that it is difficult to deliver what is going on to the drivers with vibrations similarly to sound. Furthermore, there is a concern that these auditory and tactile notifications can sometimes hinder driving of the drivers. On the other hand, there is a concern that in visual notifications, the drivers focusing on their front side may not notice displayed texts or displayed icons if the displayed texts and the displayed icons are excessively small. Therefore, it is desirable that notifications for the drivers be easy to understand and do not hinder the driving of the drivers.

SUMMARY OF THE INVENTION

Thus, an object of the present invention is to provide a vehicle notification system that enables notifications that are easy to understand and do not hinder driving of a driver to be implemented and that contributes to further improvement in traffic safety.

To solve the above-mentioned problem, a vehicle notification system according to one aspect of the present invention performs notification issuance for traffic participants including: a first vehicle that is present in a traveling lane leading to an intersection to turn right or left at the intersection; and a second vehicle that travels in a straight traveling direction toward the intersection in a lane opposite to the traveling lane. The vehicle notification system includes: a notification issuing unit that performs the notification issuance through display via a display unit that an output unit includes to avoid collision between the first vehicle and the second vehicle. The notification issuing unit displays information indicating a type of the second vehicle and information indicating a traveling direction of the second vehicle on the display unit in the first vehicle and displays information indicating a type of the first vehicle and information indicating a traveling direction of the first vehicle on the display unit in the second vehicle on the basis of first vehicle information related to the first vehicle and second vehicle information related to the second vehicle that are shared between the first vehicle and the second vehicle via communication between the first vehicle and the second vehicle at a time of the notification issuance.

Moreover, solve the above-mentioned problem, a vehicle notification system according to another aspect of the present invention performs notification issuance for traffic participants including: a host vehicle that is present in a traveling lane leading to an intersection to turn right or left at the intersection; and another vehicle that travels in a straight traveling direction toward the intersection in a lane opposite to the traveling lane. The vehicle notification system includes: a notification issuing unit that performs the notification issuance at least through display via an output unit to avoid collision between the host vehicle and the another vehicle. The output unit includes a display unit configured to switch display on a screen between an orientation indicating straight traveling of a vehicle and an orientation indicating right or left turn of the vehicle in the notification issuance.

EFFECTS OF THE INVENTION

According to aspects of the present invention, it is possible to provide a vehicle notification system that enables notifications that are easy to understand and do not hinder driving of a driver to be implemented and that contributes to further improvement in traffic safety.

BRIEF DESCRIPTION OF THE DRAWINGS

Fig. 1 is a schematic diagram illustrating an overall configuration of a vehicle notification system according to an embodiment of the present embodiment;
Fig. 2 is a schematic diagram illustrating an internal configuration of a controller included in a right turning vehicle;
Fig. 3 is a schematic diagram illustrating an internal configuration of a controller included in a straight traveling vehicle;
Fig. 4 is a flowchart illustrating an overall flow of notification control executed by the right turning vehicle;
Fig. 5 is a flowchart illustrating content of the notification control (information presentation processing) executed by the right turning vehicle;
Fig. 6 is a flowchart illustrating content of the notification control (alarm processing) executed by the right turning vehicle;
Fig. 7 is a flowchart illustrating an overall flow of notification control executed by the straight traveling vehicle;
Fig. 8 is a flowchart illustrating content of the notification control (information presentation processing) executed by the straight traveling vehicle;
Fig. 9 is a flowchart illustrating content of the notification control (alarm processing) executed by the straight traveling vehicle;
Fig. 10 is an explanatory diagram illustrating a method of calculating an information presentation distance and an alarm distance;
Fig. 11 is a schematic diagram schematically illustrating an example of a traffic situation assumed as a target of a notification;
Fig. 12 is a schematic diagram illustrating a relationship between the right turning vehicle and the straight traveling vehicle at an issuance timing of information presentation;
Fig. 13 is a schematic diagram illustrating a relationship between the right turning vehicle and the straight traveling vehicle at an issuance timing of an alarm;
Fig. 14 is a schematic diagram illustrating a situation after the straight traveling vehicle passes an intersection;
Fig. 15 is a schematic diagram illustrating an example of notification issuance through display in notification control performed in the right turning vehicle;
Fig. 16 is a schematic diagram illustrating an example of notification issuance through display in notification control performed in the straight traveling vehicle;
Fig. 17 is a schematic diagram illustrating another example of notification issuance through display in notification control performed in the right turning vehicle VA; and
Fig. 18 is a schematic diagram illustrating another example of notification issuance through display in notification control performed in the straight traveling vehicle VB.

DETAILED DESCRIPTION

Hereinafter, embodiments of the present invention will be described with reference to the drawings. Note that the same reference signs are given to identical or equivalent components in each figure.

(Overall Configuration of Vehicle Notification System)

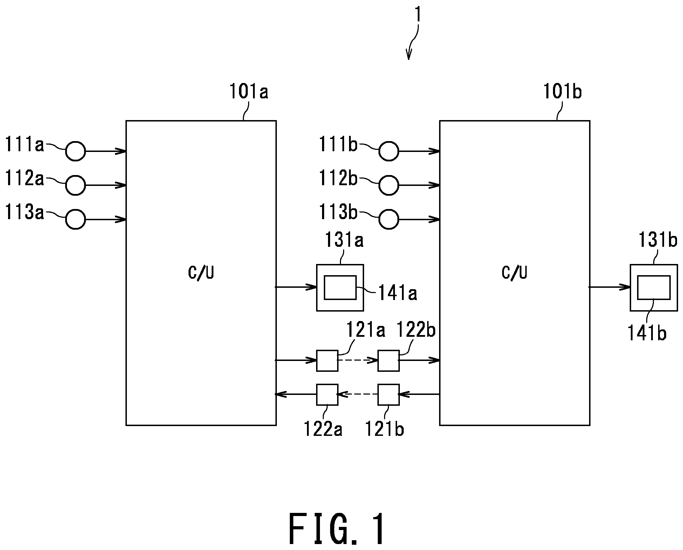

Fig. 1 is a schematic diagram illustrating a configuration of a vehicle notification system (hereinafter, simply referred to as a "notification system" in some cases) 1 according to an embodiment of the present invention.
In the present embodiment, a traffic situation where a vehicle (hereinafter, referred to as a "right turning vehicle") VA traveling toward an intersection on a left-hand traffic road and another vehicle (hereinafter, referred to as a "straight traveling vehicle") VB traveling in a straight direction toward the intersection in a lane (hereinafter, referred to as an "opposite lane" in some cases) opposite to a lane (hereinafter, referred to as a "traveling lane" in some cases) in which the right turning vehicle VA is traveling are present is assumed. The notification system 1 can be applied not only to left-hand traffic roads but also to right-hand traffic roads. In a case of right-hand traffic, a traffic situation where a left turning vehicle traveling toward an intersection and a straight traveling vehicle traveling toward the intersection in an opposite lane are present is a target. In other words, the notification system 1 can be applied to traffic situations where a right or left turning vehicle (hereinafter, referred to as a "right or left turning vehicle" or a "non-straight traveling vehicle") in a traveling lane and a straight traveling vehicle in an opposite lane are present together. In a case of left-hand traffic, the right turning vehicle is a vehicle turning right at the intersection and should not hinder the straight traveling vehicle traveling in the opposite lane from passing the intersection. Note that in a vehicle traveling on a left-hand traffic road, the driver seat is typically disposed on the right side of the vehicle in relation to the traveling direction of the vehicle. Moreover, in a vehicle traveling on a right-hand traffic, the driver seat is typically disposed on the left side of the vehicle in relation to the traveling direction of the vehicle.

As illustrated in Fig. 1, the notification system 1 includes, as main elements related to the present embodiment, auxiliary devices such as vehicle sensors 111 to 113, communication devices 121 and 122, and a human machine interface (HMI) device 131 in addition to a controller 101.

In the present embodiment, various elements including the controller 101 are provided in each of the right turning vehicle VA and the straight traveling vehicle VB. A controller 101a included in the right turning vehicle VA and a controller 101b included in the straight traveling vehicle VB configure one virtual controller constituting the notification system 1 through mutual cooperation. It is a matter of course that the notification system 1 can be configured as an in-vehicle system for the right turning vehicle VA by the controller 101a included in the right turning vehicle VA and the auxiliary devices thereof and can also be configured as an in-vehicle system for the straight traveling vehicle VB by the controller 101b included in the straight traveling vehicle VB and the auxiliary devices thereof.

In the following description, vehicle-to-vehicle communication is performed between the right turning vehicle VA and the straight traveling vehicle VB to allow vehicle information related to the right turning vehicle VA to be shared between the right turning vehicle VA and the straight traveling vehicle VB and allow vehicle information related to the straight traveling vehicle VB to be shared between both the vehicles VA and VB. In the present embodiment, the vehicle information to be communicated or shared between the right turning vehicle VA and the straight traveling vehicle VB includes current positions Pa and Pb, vehicle speeds VSPa and VSPb, types, operating statuses of right turn signals (that is, outputs of right turn signal switches), and lane IDs of the vehicles VA and VB. The communication between the right turning vehicle VA and the straight traveling vehicle VB is not limited to direct communication via vehicle-to-vehicle communication and may also be performed indirectly through roadside equipment installed at roadsides, servers disposed remotely, communication devices included in vehicles other than the right turning vehicle VA and the straight traveling vehicle VB, or the like. Hereinafter, vehicle information related to the right turning vehicle VA may be referred to as right turning vehicle information, and vehicle information related to the straight traveling vehicle VB may be referred to as straight traveling vehicle information. In the present embodiment, the types of the vehicles VA and VB in the vehicle information to be communicated or shared between the right turning vehicle VA and the straight traveling vehicle VB means which of a two-wheeled vehicle or a four-wheeled vehicle each of the right turning vehicle VA and the straight traveling vehicle VB is. The two-wheeled vehicle refers to a motorcycle.

In the present embodiment, the right turning vehicle VA and the straight traveling vehicle VB constitute the notification system 1 with similar basic configurations. The right turning vehicle VA includes the controller 101a and also includes vehicle sensors 111a, 112a, and 113a, communication devices 121a and 122a, and an HMI device 131a. On the other hand, the straight traveling vehicle VB includes the controller 101b and also includes vehicle sensors 111b, 112b, and 113b, communication devices 121b and 122b, and an HMI device 131b.

The controllers 101a and 101b constitute a calculation unit of the notification system 1 and generate and output a command signal in accordance with results of calculation. The controllers 101a and 101b are configured of microcomputers including central processing units (CPUs), storage devices such as ROMs and RAMs, and input/output interfaces.

The vehicle sensors 111a to 113a and 111b to 113b constitute a detection unit of the notification system 1. The right turning vehicle VA includes a position sensor 111a, a vehicle speed sensor 112a, and a right turn signal switch 113a as the accompanying vehicle sensors, while the straight traveling vehicle VB includes a position sensor 111b, a vehicle speed sensor 112b, and a right turn signal switch 113b as the accompanying vehicle sensors.

The position sensor 111a detects the current position Pa of the right turning vehicle VA, and the position sensor 111b detects the current position Pb of the straight traveling vehicle VB. Both the position sensors 111a and 111b can be configured of global navigation satellite system (GNSS) receivers and detect the current positions of the target vehicles VA and VB with latitude and longitude coordinates Pa (Pai, Paj) and Pb (Pbi, Pbj).

The vehicle speed sensor 112a detects the traveling speed (hereinafter, referred to as a "vehicle speed") VSPa of the right turning vehicle VA, while the vehicle speed sensor 112b detects the vehicle speed VSPb of the straight traveling vehicle VB. The vehicle speed sensors 112a and 112b can perform the detection by detecting wheel speeds (for example, rotation speeds of driven wheels) of the target vehicles VA and VB and converting the wheel speeds into traveling distances per unit time using tire dynamic radii or the like.

The right turn signal switch 113a outputs an on signal when a right direction indicator (hereinafter, referred to as a "right turn signal") included in the right turning vehicle VA is activated, and the right turn signal switch 113b outputs an on signal when the right turn signal included in the straight traveling vehicle VB is activated. The operations of the right turn signal switches 113a and 113b indicate that the target vehicles VA and VB intend to turn right on the road or change lanes.

Detection signals from the position sensor 111a, the vehicle speed sensor 112a, and the right turn signal switch 113a of the right turning vehicle VA are output to the controller 101a of the right turning vehicle VA, while detection signals from the position sensor 111b, the vehicle speed sensor 112b, and the right turn signal switch 113b of the straight traveling vehicle VB are output to the controller 101b of the straight traveling vehicle VB.

The HMI devices 131a and 131b constitute an output unit of the notification system 1. The HMI device 131a receives a command signal from the controller 101a and provides a notification related to a traffic situation to a driver of the right turning vehicle VA. The HMI device 131b receives a command signal from the controller 101b and provides a notification related to the traffic situation to a driver of the straight traveling vehicle VB.

Notifications by the HMI devices 131a and 131b are at least visually performed. The notifications by the HMI devices 131a and 131b are not limited thereto and may include, in addition to visual notifications, auditory notifications. In other words, the HMI devices 131a and 131b can provide notifications through display, and can also provide notifications both through display and through sound. The HMI devices 131a and 131b are disposed at locations that allow the drivers to easily view the HMI devices 131a and 131b, such as on dashboards in the vehicles. Note that in the present embodiment, the notification through sound includes notifications through alert sounds such as buzzer sounds, beeps, and electronic sounds, or notifications through voice guidance based on recorded human voices or on machine-generated voices.

Moreover, the HMI devices 131a and 131b include, for example, displays 141a and 141b as display units. The displays 141a and 141b display content of notifications to the driver at least by illustration. The content of the notifications on the displays 141a and 141b may include texts. This enables visual notifications. Additionally, the HMI devices 131a and 131b further include speakers, touch panels, switches, and keys, which are not illustrated in the drawings. The speakers deliver the content of the notifications to the drivers through sound. This enables auditory notifications.

In addition to the above, the right turning vehicle VA includes a transmitter 121a and a receiver 122a, while the straight traveling vehicle VB includes a transmitter 121b and a receiver 122b. The transmitter 121a and the receiver 122a included in the right turning vehicle VA constitute a vehicle-to-vehicle communication device of the right turning vehicle VA, while the transmitter 121b and the receiver 122b included in the straight traveling vehicle VB constitute a vehicle-to-vehicle communication device of the straight traveling vehicle VB. The right turning vehicle VA and the straight traveling vehicle VB can perform wireless communication via the mutual vehicle-to-vehicle communication devices.

As mentioned earlier, the communication between the right turning vehicle VA and the straight traveling vehicle VB is not limited to direct communication between the right turning vehicle VA and the straight traveling vehicle VB and may also be indirect communication via roadside equipment, remote servers, other vehicles, or the like.

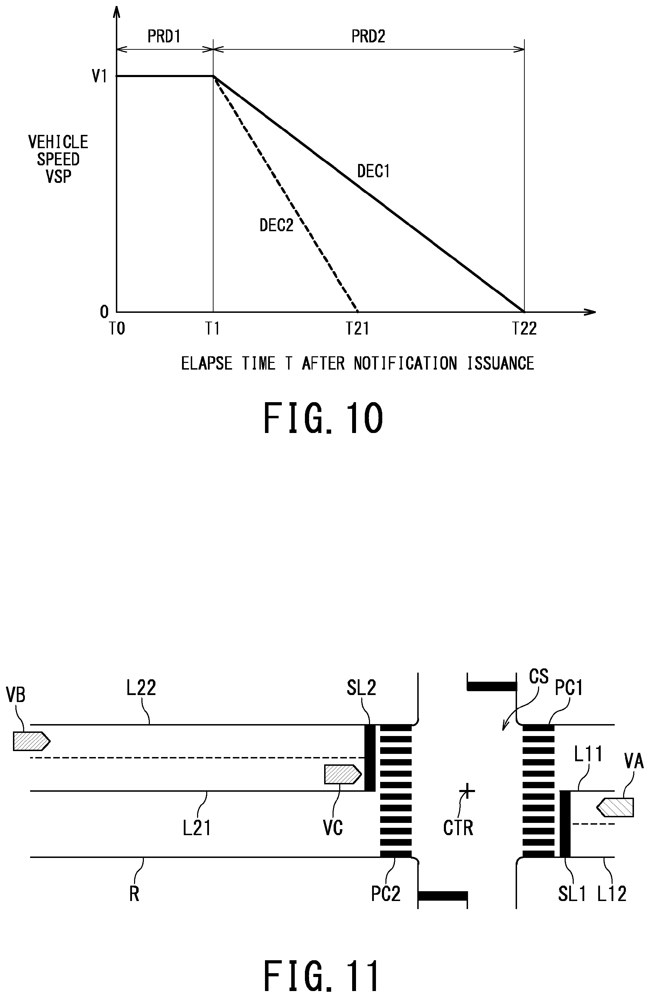

Fig. 11 is a schematic diagram schematically illustrating an example of a traffic situation assumed as a target of a notification.

In the present embodiment, a traffic situation in which the right turning vehicle VA and the straight traveling vehicle VB face each other with an intersection CS interposed therebetween is assumed. The intersection (a cross intersection in the present embodiment) CS is present on a road R with two lanes on each side including right turn lanes L11 and L21 and straight lanes L12 and L22. The right turning vehicle VA is present in the right turn lane L11 on one side and is approaching the intersection CS, while the straight traveling vehicle VB is present in the straight lane L22 on the other side and is traveling at a position separated from the intersection CS in a straight direction toward the intersection CS. Here, the right turn lane L11 corresponds to the traveling lane of the right turning vehicle VA, and the right turn lane L21 and the straight lane L22 correspond to lanes opposite to the right turning vehicle VA. The right turn lane L21 and the straight lane L22 as the opposite lanes may be referred to as an "opposite right turn lane" and an "opposite straight lane" below.

In addition to the right turning vehicle VA and the straight traveling vehicle VB, a vehicle (hereinafter, referred to as a "waiting vehicle") VC stopping to wait for turning right is present before a stop line SL2 in front of the straight traveling vehicle VB in the opposite right turn lane L21. In the illustrated traffic situation, the waiting vehicle VC is a visual obstacle blocking a part of a view from the right turning vehicle VA and blocking a part of a view from the straight traveling vehicle VB. In this situation, it is difficult to visually recognize the straight traveling vehicle VB from the right turning vehicle VA due to the straight traveling vehicle VB being present at a blind angle of the waiting vehicle VC seen from the right turning vehicle VA, and it is difficult to visually recognize the right turning vehicle VA from the straight traveling vehicle VB due to the right turning vehicle VA being present at a blind angle of the waiting vehicle VC seen from the straight traveling vehicle VB.

In such a situation, the notification system 1 monitors a relative positional relationship between the right turning vehicle VA and the straight traveling vehicle VB after the right turning vehicle VA displays its intention to turn right at the intersection CS (hereinafter simply referred to as a "right turn intention"). Then, the notification system 1 issues a notification in accordance with a degree of urgency of circumstances related to contact or collision between the right turning vehicle VA and the straight traveling vehicle VB at an appropriate timing after the right turning vehicle VA approaches the intersection CS and before the right turning vehicle VA passes the intersection CS. Note that in the present embodiment, the notification system 1 ends the notification issuance at a timing at which the right turning vehicle VA has passed the intersection CS. The end of the notification issuance is not limited thereto and the notification system 1 may end the notification issuance at a timing at which the straight traveling vehicle VB has passed the intersection CS.

(Internal Configuration of Controller)

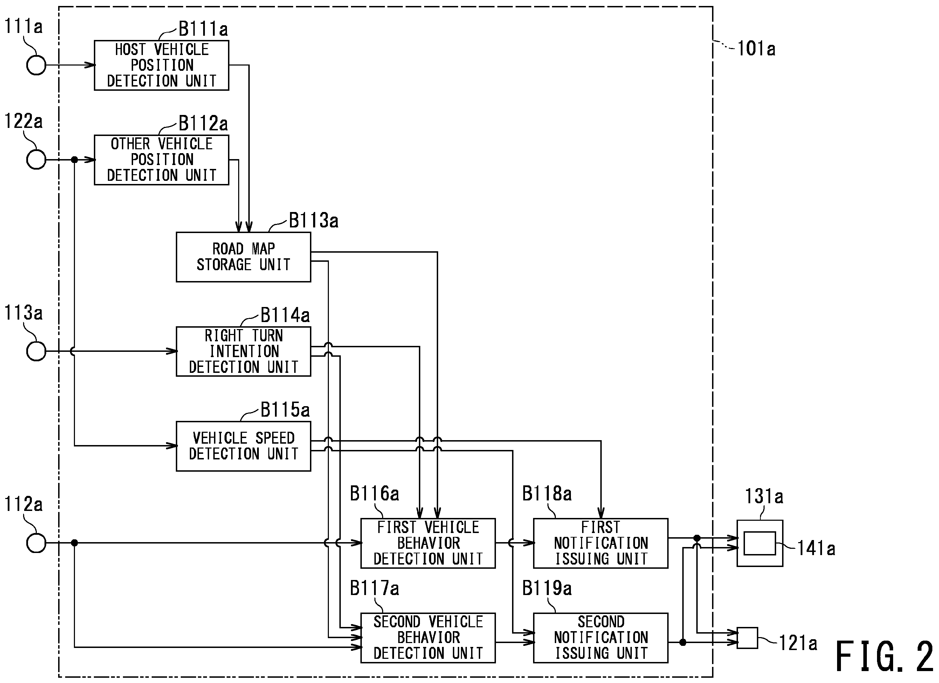

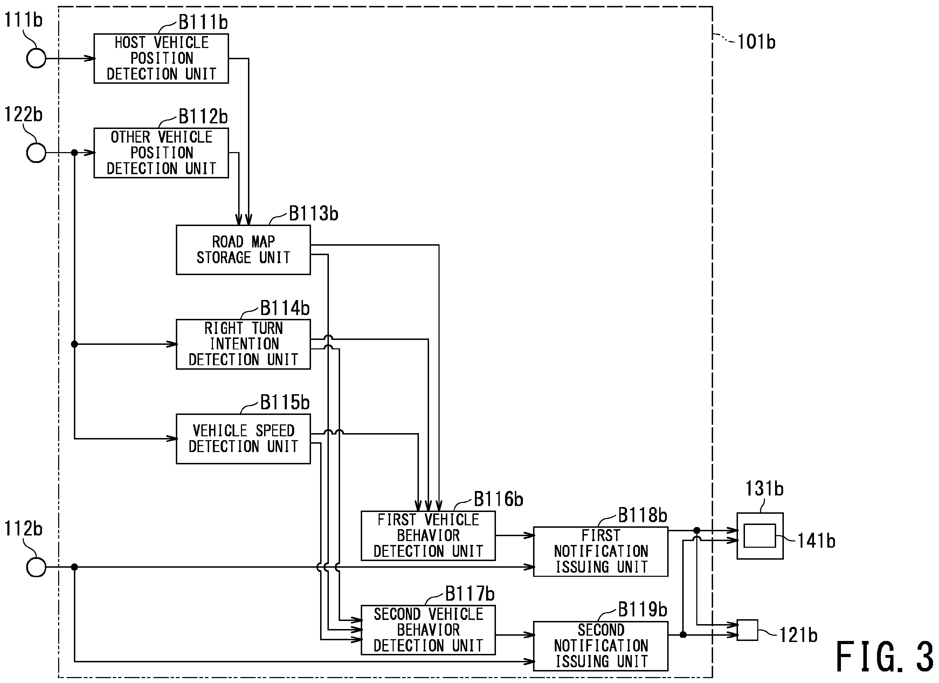

Fig. 2 is a schematic diagram illustrating an internal configuration of the controller 101a included in the right turning vehicle VA, and Fig. 3 is a schematic diagram illustrating an internal configuration of the controller 101b included in the straight traveling vehicle VB. The internal configuration of each of the controllers 101a and 101b will be described in turn on the basis of Figs. 2 and 3 and with reference to Fig. 11 as needed.

As illustrated in Fig. 2, the controller 101a of the right turning vehicle VA includes a host vehicle position detection unit B111a, an other vehicle position detection unit B112a, a road map storage unit B113a, a right turn intention detection unit B114a, a vehicle speed detection unit B115a, a first vehicle behavior detection unit B116a, a second vehicle behavior detection unit B117a, a first notification issuing unit B118a, and a second notification issuing unit B119a. A function of each of these units B111a to B119a is realized in a software manner by the central processing unit included in the controller 101a reading a computer program stored in the storage device and operating in accordance with instructions of the program.

Note that data held by each of the components B111a to B119a and results of processing performed by each of the components B111a to B119a can be mutually referenced among the components B111a to B119a regardless of the presence or absence of arrows indicating a data flow inside the controller 101a in Fig. 2. The data held by each of the components B111a to B119a includes detection signals from the vehicle sensors 111a, 112a, and 113a output to the controller 101a, and vehicle information acquired from the straight traveling vehicle VB via the receiver 122a. These premises in the controller 101a are also applicable to the controller 101b of the straight traveling vehicle VB.

The host vehicle position detection unit B111a detects the current position Pa of the right turning vehicle VA, which is a host vehicle. The detection of the current position Pa performed by the host vehicle position detection unit B111a is based on an output signal from the position sensor 111a included in the right turning vehicle VA.

The other vehicle position detection unit B112a detects the current position Pb of the straight traveling vehicle VB, which is another vehicle. The detection of the current positions Pb performed by the other vehicle position detection unit B112a is performed by reading position information indicating the current position Pb from vehicle information acquired from the straight traveling vehicle VB via the receiver 122a included in the right turning vehicle VA.

The road map storage unit B113a stores a road map. In the present embodiment, the current positions Pa and Pb of the right turning vehicle VA and the straight traveling vehicle VB are coordinates of latitudes and longitudes indicating these positions Pa and Pb. The road map storage unit B113a extracts a map of a range or a section including the intersection CS in the road map and specifies the current positions Pa and Pb of the right turning vehicle VA and the straight traveling vehicle VB on the road map. In the road map, identifiers (hereinafter, referred to as "link IDs") corresponding to lanes leading to the intersection CS, such as the right turn lanes L11 and L21 and the straight lanes L12 and L22, are assigned and are stored to correspond to the lanes L11, L21, L12, and L22. It is possible to distinguish the lane in which a target vehicle is present or is traveling by specifying the position on the road map.

The right turn intention detection unit B114a detects that the right turning vehicle VA has a right turn intention. The right turn intention detection by the right turn intention detection unit B114a can be performed with an output signal from the right turn signal switch 113a included in the right turning vehicle VA, and in a case where the right turn lane L11 is a lane only for right turn, the detection can also be performed by reading the link ID associated with the lane where the vehicle is traveling from the road map and detecting that the right turning vehicle VA is present in the right turn lane L11.

The vehicle speed detection unit B115a detects the vehicle speed VSPb of the straight traveling vehicle VB. The vehicle speed detection unit B115a detects the vehicle speed VSPb of the straight traveling vehicle VB (that is, another vehicle) by reading vehicle speed information indicating the vehicle speed VSPb from the vehicle information acquired from the straight traveling vehicle VB via the receiver 122a included in the right turning vehicle VA.

The first vehicle behavior detection unit B116a detects that the right turning vehicle VA is present at a first predetermined position P1 in the lane (that is, the right turn lane L11) where the right turning vehicle VA is traveling or at a position closer to a center position (hereinafter, referred to as an "intersection center") CTR of the intersection CS than the first predetermined position P1 after the right turn intention detection unit B114a detects the right turn intention on the basis of the current position Pa of the right turning vehicle VA on the road map, in other words, after the right turning vehicle VA displays its right turn intention by entering the right turn lane L11 or operating the right turn signal.

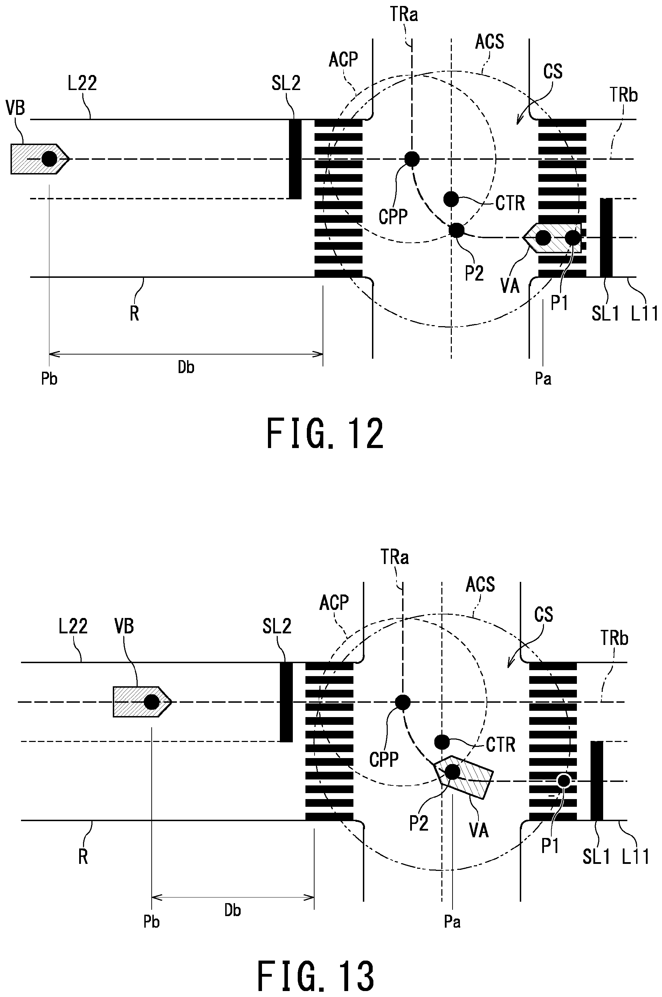

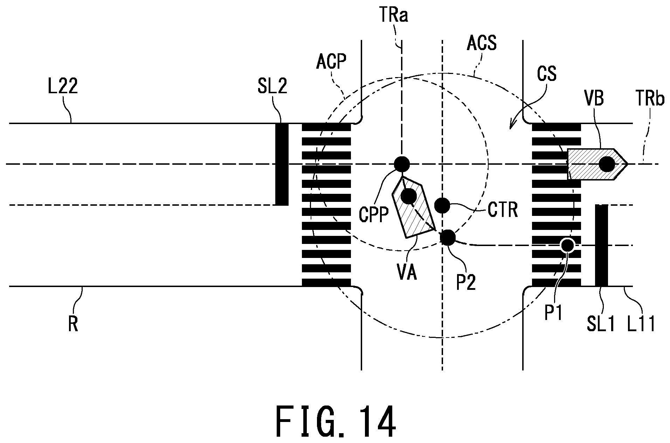

Fig. 12 is a schematic diagram illustrating a positional relationship between the right turning vehicle VA and the straight traveling vehicle VB at a timing when the right turning vehicle VA exceeds the stop line SL1 in the right turn lane L11 and enters the intersection CS. Fig. 12 illustrates only the right turn lane L11 and the straight lane L22 in the road R with two lanes on each side by simplifying the illustration of the road R (the same applies to Figs. 13 and 14, which will be described later).

In the present embodiment, an intersection area ACS is set as a determination criterion to recognize the relative positional relationship between the right turning vehicle VA and the intersection CS. The intersection area ACS is set to overlap a path TRa along which the right turning vehicle VA travels when passing the intersection CS, and the presence of the right turning vehicle VA at the first predetermined position P1 in the right turn lane L11 or the position closer to the intersection center CTR than the first predetermined position P1 is detected by arrival of the right turning vehicle VA at the intersection area ACS or entrance thereof into the intersection area ACS after displaying its right turn intention. The first vehicle behavior detection unit B116a sets the timing at which the right turning vehicle VA reaches the intersection area ACS or enters the intersection area ACS as a first notification issuance timing. The first notification issuance timing set by the first vehicle behavior detection unit B116a is a timing at which notification issuance in a first predetermined mode is performed in the right turning vehicle VA. The intersection area ACS is set as a circular area that includes the first predetermined position P1 on its outer edge concentrically with the intersection center CTR. Figs. 12 to 14 illustrate the intersection area ACS by two-dotted chain lines, illustrate the traveling path TRa of the right turning vehicle VA by one-dotted chain lines, and illustrate a predicted collision area ACP and a traveling path TRb of the straight traveling vehicle VB, which will be described later, by dashed lines and one-dotted chain lines, respectively.

The second vehicle behavior detection unit B117a regards, as a "predicted collision point" CPP, a point at which the path TRa along which the right turning vehicle VA travels when passing the intersection CS and the path TRb along which the straight traveling vehicle VB travels when passing the intersection CS intersect and detects, on the basis of the current position Pa of the right turning vehicle VA on the road map, that the right turning vehicle VA is traveling at a position closer to the predicted collision point CPP than the first predetermined position P1 toward the predicted collision point CPP or that the right turning vehicle VA is present at a position closer to the predicted collision point CPP than a second predetermined position P2 between the first predetermined position P1 and the predicted collision point CPP.

Fig. 13 is a schematic diagram illustrating a positional relationship between the right turning vehicle VA and the straight traveling vehicle VB at a timing at which the right turning vehicle VA moves ahead inside the intersection CS and approaches the intersection center CTR after entering the intersection CS.

In the present embodiment, the predicted collision area ACP with the predicted collision point CPP included at its center is set as an area that is different from the intersection area ACS. The traveling of the right turning vehicle VA at a position closer to the predicted collision point CPP than the first predetermined position P1 or presence of the right turning vehicle VA at a position closer to the predicted collision point CPP than the second predetermined position P2 is detected on the basis of the right turning vehicle VA traveling toward the predicted collision point CPP inside the intersection area ACS or being present inside the predicted collision area ACP after entering the intersection area ACS. The second vehicle behavior detection unit B117a sets the timing at which traveling of the right turning vehicle VA toward the predicted collision point CPP inside the intersection area ACS or presence of the right turning vehicle VA inside the predicted collision area ACP is detected as a second notification issuance timing. The second notification issuance timing set by the second vehicle behavior detection unit B117a is a timing at which the right turning vehicle VA performs notification issuance in a second predetermined mode. The predicted collision area ACP is set as a circular area that includes the second predetermined position P2 on its outer edge and has a smaller area than the intersection area ACS.

The shape of the intersection area ACS is not limited to the circular shape and may be a shape (for example, a quadrangular shape having four corners at a corner cut) following a range in which the two intersecting roads overlap or may be a shape within a range surrounded by the stop lines SL1 and SL2 provided in the intersecting roads, respectively. The same applies to the predicted collision area ACP, and it is possible to set a shape other than the circular shape, such as a quadrangular shape (for example, a quadrangular shape having two sides that are parallel to a road boundary line defining the opposite straight lane L22).

The first notification issuing unit B118a outputs a command signal to perform notification issuance in the first predetermined mode to the HMI device 131a included in the host vehicle (that is, the right turning vehicle VA) under a condition that a first predetermined notification issuance condition defined in advance in regard to the position Pb of another vehicle, which is the straight traveling vehicle VB, is met at the timing at which the presence of the right turning vehicle VA at the first predetermined position P1 in the right turn lane L11 or a position closer to the intersection center CTR than the first predetermined position P1 is detected, that is, at the first notification issuance timing. In the present embodiment, the output of the command signal to perform the notification issuance in the first predetermined mode from the first notification issuing unit B118a to the HMI device 131a is regarded as "execution of the notification issuance in the first predetermined mode".

Furthermore, a first notification issuance flag is turned from OFF to ON in the controller 101a in a case where the first predetermined notification issuance condition is met at the first notification issuance timing. In other words, the first notification issuance flag indicates that the first predetermined notification issuance condition has been met at the first notification issuance timing. Typically, the first notification issuing unit B118a outputs a command signal to perform notification issuance in the first predetermined mode to the HMI device 131a only when the first notification issuance flag is ON. In other words, the first notification issuing unit B118a performs the notification issuance in the first predetermined mode via the HMI device 131a in a case where the first notification issuance flag is ON, or the first notification issuing unit B118a does not perform the notification issuance in the first predetermined mode via the HMI device 131a in a case where the first notification issuance flag is OFF.

The first predetermined notification issuance condition is that the straight traveling vehicle VB is present at a first predetermined distance (hereinafter, referred to as an "information presentation distance") Dth1, which is relatively long, from the intersection CS or at a position closer to the intersection CS than the first predetermined distance Dth1. In the present embodiment, the distance from the outer edge of the predicted collision area ACP, specifically, an intersecting point between the traveling path TRb of the straight traveling vehicle VB and the circle (the circle illustrated by the dashed line in the drawings) defining the outer edge of the predicted collision area ACP to the straight traveling vehicle VB as illustrated in Figs. 12 and 13 is employed as a distance Db from the intersection CS to the straight traveling vehicle VB.

The HMI device 131a that has received the command signal from the first notification issuing unit B118a to perform the notification issuance in the first predetermined mode issues a notification to promote the driver of the right turning vehicle VA to recognize that the straight traveling vehicle VB traveling toward the intersection CS in the opposite straight lane L22 is present using display and sound. The notification issuance performed by the first notification issuing unit B118a is notification issuance to present information for relatively low urgency in regard to collision between the right turning vehicle VA and the straight traveling vehicle VB. In other words, the notification issuance performed by the first notification issuing unit B118a is notification issuance in a case where the risk of collision between the right turning vehicle VA and the straight traveling vehicle VB is low.

The second notification issuing unit B119a outputs a command signal to issue a notification in a second predetermined mode to the HMI device 131a under a condition that a second predetermined notification issuance condition defined in advance in regard to the position Pb of the straight traveling vehicle VB is established at a timing at which traveling of the right turning vehicle VA at a position closer to the predicted collision point CPP than the first predetermined position P1 or presence of the right turning vehicle VA at a position closer to the predicted collision point CPP than the second predetermined position P2 is detected, that is, at the first notification issuance timing. In the present embodiment, the output of the command signal to perform the notification issuance in the second predetermined mode from the second notification issuing unit B119a to the HMI device 131a is regarded as "execution of the notification issuance in the second predetermined mode".

Furthermore, a second notification issuance flag is turned from OFF to ON in the controller 101a in a case where the second predetermined notification issuance condition is met at the second notification issuance timing. In other words, the second notification issuance flag indicates that the second predetermined notification issuance condition has been met at the second notification issuance timing. Typically, the second notification issuing unit B119a outputs a command signal to perform notification issuance in the second predetermined mode to the HMI device 131a only when the second notification issuance flag is ON. In other words, the second notification issuing unit B119a performs the notification issuance in the second predetermined mode via the HMI device 131a in a case where the second notification issuance flag is ON, or the second notification issuing unit B119a does not perform the notification issuance in the second predetermined mode via the HMI device 131a in a case where the second notification issuance flag is OFF. Note that the first notification issuance flag may be turned from ON to OFF and the second notification issuance flag may be kept ON in a case where the first notification issuance flag and the second notification issuance flag are turned into ON at the same time. In other words, higher priority may be placed on keeping the second notification issuance flag ON than on keeping the first notification issuance flag ON.

The second predetermined notification issuance condition is that the straight traveling vehicle VB is present at a second predetermined distance (hereinafter, referred to as an "alarm distance") Dth2, which is shorter than the information presentation distance Dth1, from the intersection CS or at a position closer to the intersection CS than the second predetermined distance Dth2.

The notification issuance in the second predetermined mode is notification issuance in a mode that is different from the first predetermined mode, and the HMI device 131a that has received the command signal from the second notification issuing unit B119a to perform the notification issuance in the second predetermined mode issues a notification to promote the driver of the right turning vehicle VA to recognize higher urgency in regard to collision between the right turning vehicle VA and the straight traveling vehicle VB using display and sound. The notification issuance performed by the second notification issuing unit B119a is notification issuance that is more prominent and more visually or auditorily appealing to the driver as compared with the notification issuance performed by the first notification issuing unit B118a. In other words, the notification issuance performed by the second notification issuing unit B119a is notification issuance in a case where the risk of collision between the right turning vehicle VA and the straight traveling vehicle VB is high.

The first notification issuing unit B118a and the second notification issuing unit B119a can also provide a notification that the notification in each mode has been issued to the straight traveling vehicle VB via the transmitter 121a in accordance with the output of the command signal to the HMI device 131a and promote a notification to be issued in an appropriate mode in accordance with urgency in regard to collision against the host vehicle (that is, the right turning vehicle VA).

Fig. 10 is an explanatory diagram illustrating a method of calculating the information presentation distance Dth1 and the alarm distance Dth2.

The information presentation distance Dth1 and the alarm distance Dth2 are calculated as a distance by which the straight traveling vehicle VB is expected to travel before stopping after the notification issuance, that is, the distance required by the straight traveling vehicle VB to stop on the basis of the vehicle speed VSPb of the straight traveling vehicle VB and deceleration degrees DEC1 and DEC2 set in advance in accordance with the modes of the notification issuance. Hereinafter, the deceleration degree DEC1 may be referred to as a "first predetermined deceleration degree DEC1". The deceleration degree DEC2 may be referred to as a "second predetermined deceleration degree DEC2".

Specifically, the information presentation distance Dth1 is calculated by adding the distances for which the straight traveling vehicle VB is expected to travel for a break reaction time PRD1 and a deceleration time PRD2 on the basis of the vehicle speed VSPb (= V1) of the straight traveling vehicle VB at the detection timing of the first vehicle behavior detection unit B116a. The break reaction time PRD1 is a total time of a reaction time required for perception, judgment, and operation before the driver actually performs a brake operation after the notification issuance and an operation delay time for the system, hydraulic equipment, and the like in response to the brake operation. In the present embodiment, the break reaction time PRD1 is set in advance as a constant time (= $\Delta T$). The deceleration time PRD2 is a time required for the vehicle to come to a stop after the brake actually starts to work and can be calculated on the basis of the vehicle speed VSPb and the deceleration degree DEC1 (PRD2 = V1/DEC1). In this manner, the calculation of the information presentation distance Dth1 is given by Equation (1) below.

$$\text{Dth1 = V1} \times \Delta T + \text{V1} \times \text{(V1/DEC1)/2...(1)}$$

Although the alarm distance Dth2 is similarly calculated by adding the distance for which the straight traveling vehicle VB is expected to travel for each of the break reaction time PRD1 and the deceleration time PRD2, the deceleration degree DEC2 which is different from that used to calculate the information presentation distance Dth1 is employed. The deceleration degree DEC2 for calculating the alarm distance is a higher deceleration degree than the deceleration degree DEC1 for calculating the information presentation distance, in other words, a deceleration degree having a larger absolute value than that of the deceleration degree DEC1 ($|DEC1| < |DEC2|$). Specifically, it is given by Equation (2) below.

$$\text{Dth2 = V1} \times \Delta T + \text{V1} \times \text{(V1/DEC2)/2...(2)}$$

In the present embodiment, the controller 101a included in the right turning vehicle VA and the controller 101b included in the straight traveling vehicle VB have basically similar configurations and include mutually corresponding elements.

As illustrated in Fig. 3, the controller 101b of the straight traveling vehicle VB includes a host vehicle position detection unit B111b, an other vehicle position detection unit B112b, a road map storage unit B113b, a right turn intention detection unit B114b, a vehicle speed detection unit B115b, a first vehicle behavior detection unit B116b, a second vehicle behavior detection unit B117b, a first notification issuing unit B118b, and a second notification issuing unit B119b. Differences between an internal configuration of the controller 101b and that of the controller 101a of the right turning vehicle VA will be mainly described below.

The host vehicle position detection unit B111b is adapted to detect the current position Pb of the straight traveling vehicle VB, which is the host vehicle, and the detection of the current position Pb is based on an output signal from the position sensor 111b included in the straight traveling vehicle VB.

The other vehicle position detection unit B112b is adapted to detect the current position Pa of the right turning vehicle VA, which is another vehicle, and the detection of the current position Pa is based on reading of position information indicating the current position Pa from vehicle information acquired from the right turning vehicle VA via the receiver 122b included in the straight traveling vehicle VB.

Similarly to the road map storage unit B113a, the road map storage unit B113b stores a road map that includes the intersection CS and includes the assigned link ID of each lane leading to the intersection CS and specifies the current positions Pb and Pa of the straight traveling vehicle VB and the right turning vehicle VA, respectively, on the road map. Although the road maps stored in the road map storage units B113b and B113a may have different levels of accuracy, both the maps employ an accuracy that is compatible with satellite positioning using GNSS in the present embodiment.

Note that the road maps stored in the road map storage unit B113b and the road map storage unit B113a can be updated to the latest road map saved in a remote server by causing the straight traveling vehicle VB and the right turning vehicle VA to communicate with the remote server, or the road maps can be updated to the latest road map saved in a portable storage medium (storage device) that saves the latest road map by connecting the storage medium to the straight traveling vehicle VB and the right turning vehicle VA.

The right turn intention detection unit B114b is adapted to detect a right turn intention of the right turning vehicle VA, and the detection of the right turn intention is based on identification of the link ID of the lane where the right turning vehicle VA is present from the current position Pa of the right turning vehicle VA or reading of information indicating an operating status of the right turn signal from vehicle information acquired from the right turning vehicle VA via the receiver 122b. It is also possible to include the link IDs of the lanes where the vehicles VA and VB are present in vehicle information exchanged between the straight traveling vehicle VB and the right turning vehicle VA and to detect the right turn intention of the right turning vehicle VA on the basis of the link IDs acquired through communication.

The vehicle speed detection unit B115b is adapted to detect the vehicle speed VSPa of the right turning vehicle VA, and the detection thereof is based on reading of vehicle speed information indicating the vehicle speed VSPa from vehicle information acquired from the right turning vehicle VA via the receiver 122b.

The first vehicle behavior detection unit B116b detects that the right turning vehicle VA is located at a predetermined relative position with reference to the first predetermined position P1 relative to the intersection CS after showing its right turn intention. Specifically, the first vehicle behavior detection unit B116b compares the current position Pa of the right turning vehicle VA on the road map with the intersection area ACS and detects that the right turning vehicle VA has arrived at the intersection area ACS or has entered the intersection area ACS similarly to the above description. Then, the first vehicle behavior detection unit B116b sets a timing at which any of these behaviors of the right turning vehicle VA is detected as a first notification issuance timing. The first notification issuance timing set by the first vehicle behavior detection unit B116b is a timing at which the straight traveling vehicle VB performs notification issuance in the first predetermined mode.

The size and the shape of the intersection area ACS may be the same or different between the controller 101a of the right turning vehicle VA and the controller 101b of the straight traveling vehicle VB. It is possible to set the size of the intersection area ACS to be variable or to change the shape thereof in accordance with a drivers' selection or trends of driving states at the time of passing the intersection CS, for example.

The second vehicle behavior detection unit B117b monitors a behavior of the right turning vehicle VA after the right turning vehicle VA enters the intersection CS and detects that the right turning vehicle VA is traveling toward the predicted collision point CPP in the intersection area ACS or is present inside the predicted collision area ACP after entering the intersection area ACS. Then, the second vehicle behavior detection unit B117b sets a timing at which any of these behaviors of the right turning vehicle VA is detected as a second notification issuance timing. The second notification issuance timing set by the second vehicle behavior detection unit B117b is a timing at which the straight traveling vehicle VB performs notification issuance in the second predetermined mode.

Although the size and the shape of the predicted collision area ACP may be different between the controller 101a of the right turning vehicle VA and the controller 101b of the straight traveling vehicle VB, similar setting is adopted for both in the present embodiment. The predicted collision area ACP may be preset as default coordinates on the road map, or coordinate information of the predicted collision area ACP set in one of the controllers 101a and 101b may be provided to and set in the other controller through vehicle-to-vehicle communication.

The first notification issuing unit B118b outputs a command signal to issue the notification in the first predetermined mode to the HMI device 131b included in the host vehicle (that is, the straight traveling vehicle VB) under a condition that the first predetermined notification issuance condition related to the position Pb of the straight traveling vehicle VB is established at a timing at which the arrival of the right turning vehicle VA at the intersection area ACS or entrance thereof to the intersection area ACS is detected, that is, at the first notification issuance timing. Similarly to the above description, the first predetermined notification issuance condition is that the straight traveling vehicle VB is located at the information presentation distance Dth1 from the intersection CS or is present at a position closer to the intersection CS than the information presentation distance Dth1. The output of the command signal to perform the notification issuance in the first predetermined mode from the first notification issuing unit B118b to the HMI device 131b is regarded as "execution of the notification issuance in the first predetermined mode".

Furthermore, a first notification issuance flag is turned from OFF to ON in the controller 101b in a case where the first predetermined notification issuance condition is met at the first notification issuance timing set by the first vehicle behavior detection unit B116b. Similarly to the above description, the first notification issuance flag indicates that the first predetermined notification issuance condition has been met at the first notification issuance timing. Similarly to the first notification issuing unit B118a, the first notification issuing unit B118b typically outputs a command signal to perform notification issuance in the first predetermined mode to the HMI device 131b only when the first notification issuance flag is ON. In other words, the first notification issuing unit B118b performs the notification issuance in the first predetermined mode via the HMI device 131b in a case where the first notification issuance flag is ON, or the first notification issuing unit B118b does not perform the notification issuance in the first predetermined mode via the HMI device 131b in a case where the first notification issuance flag is OFF.

The HMI device 131b that has received the command signal from the first notification issuing unit B118b issues a notification to promote the driver of the straight traveling vehicle VB to recognize that the right turning vehicle VA which the driver should pay attention to is present in the right turn lane L11 in the opposite lanes using display and sound. Similarly to the above description, the notification issuance performed by the first notification issuing unit B118b is notification issuance to present information for relatively low urgency in regard to collision between the straight traveling vehicle VB and the right turning vehicle VA. In other words, the notification issuance performed by the first notification issuing unit B118b is notification issuance in a case where the risk of collision between the straight traveling vehicle VB and the right turning vehicle VA is low.

The second notification issuing unit B119b outputs the command signal to perform the notification issuance in the second predetermined mode, which is a command signal to issue a notification in the second predetermined mode, to the HMI device 131b under a condition that the second predetermined notification issuance condition related to the position Pb of the straight traveling vehicle VB is established at a timing at which traveling of the right turning vehicle VA toward the predicted collision point CPP in the intersection area ACS or presence thereof inside the predicted collision area ACP is detected, that is, at the second notification issuance timing. The second predetermined notification issuance condition is that the straight traveling vehicle VB is located at the alarm distance Dth2 from the intersection CS or is present at a position closer to the intersection CS than the alarm distance Dth2. The output of the command signal to perform the notification issuance in the second predetermined mode from the second notification issuing unit B119b to the HMI device 131b is regarded as "execution of the notification issuance in the second predetermined mode".

Furthermore, a second notification issuance flag is turned from OFF to ON in the controller 101b in a case where the second predetermined notification issuance condition is met at the second notification issuance timing set by the second notification issuing unit B119b. Similarly to the above description, the second notification issuance flag indicates that the second predetermined notification issuance condition has been met at the second notification issuance timing. Similarly to the second notification issuing unit B119a, the second notification issuing unit B119b typically outputs a command signal to perform notification issuance in the second predetermined mode to the HMI device 131b only when the second notification issuance flag is ON. In other words, the second notification issuing unit B119b performs the notification issuance in the second predetermined mode via the HMI device 131b in a case where the second notification issuance flag is ON, or the second notification issuing unit B119b does not perform the notification issuance in the second predetermined mode via the HMI device 131b in a case where the second notification issuance flag is OFF. Similarly to the above description, the first notification issuance flag may be turned from ON to OFF and the second notification issuance flag may be kept ON in a case where the first notification issuance flag and the second notification issuance flag are turned into ON at the same time. In other words, higher priority may be placed on keeping the second notification issuance flag ON than on keeping the first notification issuance flag ON.

The HMI device 131b that has received the command signal from the second notification issuing unit B119b issues a notification to promote the driver of the straight traveling vehicle VB to recognize higher urgency in regard to collision between the straight traveling vehicle VB and the right turning vehicle VA using display and sound. Similarly to the above description, the notification issuance performed by the second notification issuing unit B119a is also notification issuance that is more prominent and more visually or auditorily appealing to the driver. In other words, the notification issuance performed by the second notification issuing unit B119b is notification issuance in a case where the risk of collision between the straight traveling vehicle VB and the right turning vehicle VA is high.

The information presentation distance Dth1 and the alarm distance Dth2 may be set to equal distances between the controller 101a and the controller 101b or may be set to different distances therebetween. For example, a deceleration degree when the straight traveling vehicle VB has actually decelerated in response to an alarm is learned, and the deceleration degrees used when the distances Dth1 and Dth2 are calculated are corrected on the basis of a learned value that indicates the actual deceleration degree. Specifically, in a case where the actual deceleration in response to an alarm tends to be slow as compared with the case of the deceleration degree DEC2, the deceleration degrees DEC1 and DEC2 are corrected to decrease, such that the notification issuance for each of the information presentation and the alarm can be performed at an earlier timing.

The first notification issuing unit B118b and the second notification issuing unit B119b can also notify the right turning vehicle VA of the fact that the notification in each mode has been issued via the transmitter 121b in accordance with the output of the command signal to the HMI device 131b.

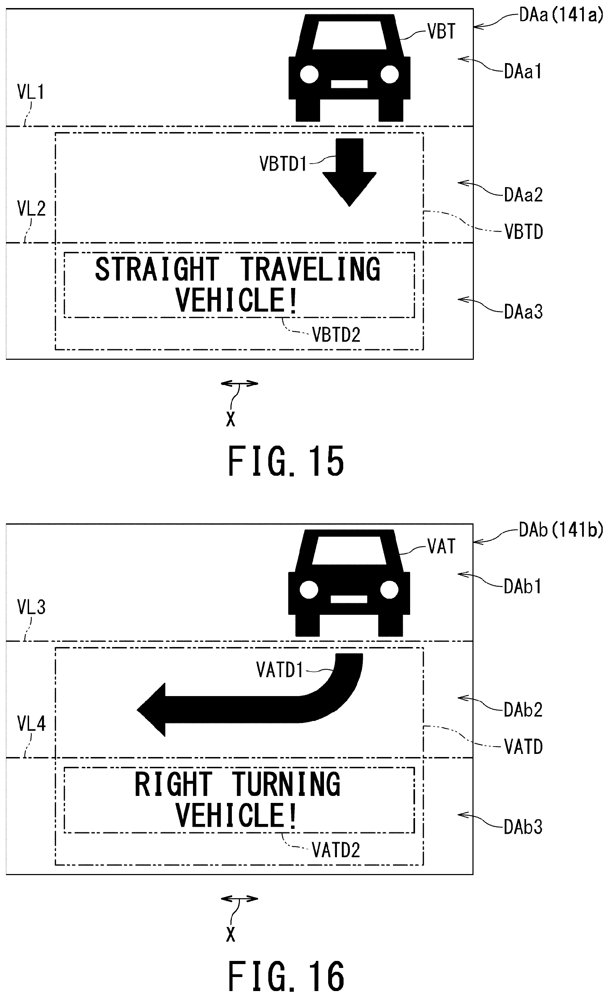

Fig. 15 is a schematic diagram illustrating an example of notification issuance through display in notification control performed in the right turning vehicle VA.

Fig. 16 is a schematic diagram illustrating an example of notification issuance through display in notification control performed in the straight traveling vehicle VB.

As mentioned earlier, drivers who are focusing on their front side may not notice notifications in a case where displayed texts or displayed icons are small in visual notifications. Therefore, even if the HMI device 131a and the HMI device 131b display content of a notification to the drivers, there is a concern that the driver who is focusing on the front side may not notice the displayed content of the notification in a case where the displayed texts or displayed icons are small.

Thus, as illustrated in Fig. 15, the first notification issuing unit B118a and the second notification issuing unit B119a of the controller 101a of the right turning vehicle VA display information VBT indicating the type of the straight traveling vehicle VB, which is the counterpart vehicle for the right turning vehicle VA, and information VBTD indicating the traveling direction (straight traveling direction) of the straight traveling vehicle VB on the display 141a of the HMI device 131a in the right turning vehicle VA on the basis of the straight traveling vehicle information related to the straight traveling vehicle VB obtained through the communication between the right turning vehicle VA and the straight traveling vehicle VB at the time of notification issuance. Additionally, as illustrated in Fig. 16, the first notification issuing unit B118b and the second notification issuing unit B119b of the controller 101b of the straight traveling vehicle VB display information VAT indicating the type of the right turning vehicle VA, which is a counterpart vehicle for the straight traveling vehicle VB, and information VATD indicating the traveling direction (right turning direction) of the right turning vehicle VA on the display 141b of the HMI device 131b in the straight traveling vehicle VB on the basis of the right turning vehicle information related to the right turning vehicle VA obtained via the communication between the right turning vehicle VA and the straight traveling vehicle VB at the time of notification issuance.

It becomes easier for the drivers to understand the content of the notifications by limiting the content of the notifications displayed in the right turning vehicle VA and the straight traveling vehicle VB to minimum necessary information, which is information indicating the types and the traveling directions of the counterpart vehicles. Moreover, it becomes possible to display the content of the notification by illustration or text with a relatively large size, for example, by limiting the information to minimum necessary information. This leads to improvement in drivers' visibility of the content of the notifications. Therefore, the notification system 1 can enable the drivers to accurately recognize the content of the notifications in short periods of time without hindering driving of the drivers. Hereinafter, notification issuance performed by the first notification issuing units B118a and B118b and the second notification issuing units B119a and B119b in the notification system 1 according to the present embodiment through display via displays 141a and 141b will be described in more detail.

In the right turning vehicle VA, the information VBT indicating the type of the straight traveling vehicle VB displayed on the display 141a of the HMI device 131a preferably includes at least one of a two-wheeled vehicle and a four-wheeled vehicle. Similarly, in the straight traveling vehicle VB, the information VAT indicating the type of the right turning vehicle VA displayed on the display 141b of the HMI device 131b preferably includes at least one of a two-wheeled vehicle and a four-wheeled vehicle. By doing so, the driver of the right turning vehicle VA can grasp which of the two-wheeled vehicle and the four-wheeled vehicle the straight traveling vehicle VB that is present at a blind angle seen from the right turning vehicle VA is. Furthermore, the driver of the straight traveling vehicle VB can grasp which of the two-wheeled vehicle and the four-wheeled vehicle the right turning vehicle VA that is present at a blind angle seen from the straight traveling vehicle VB is. The information VBT indicating the type of the straight traveling vehicle VB in Fig. 15 and the information VAT indicating the type of the right turning vehicle VA in Fig. 16 each indicate by illustration that they are four-wheeled vehicles.

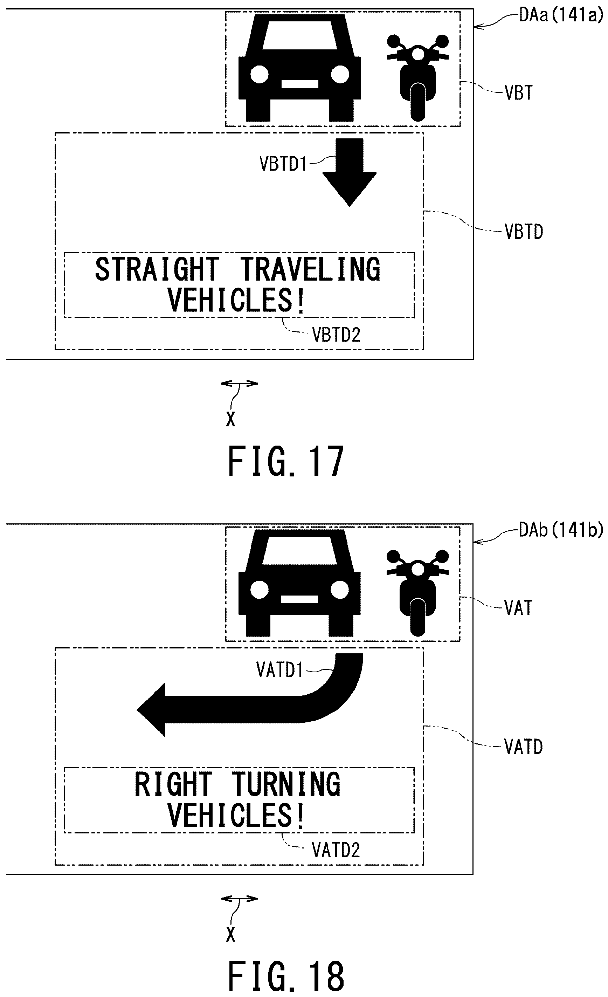

Fig. 17 is a schematic diagram illustrating another example of notification issuance through display in notification control performed in the right turning vehicle VA.

Fig. 18 is a schematic diagram illustrating another example of notification issuance through display in notification control performed in the straight traveling vehicle VB.

Note that as illustrated in Fig. 17, a case where both the two-wheeled vehicle and the four-wheeled vehicle are displayed as types of the straight traveling vehicle VB in the right turning vehicle VA is, for example, a case where a straight traveling vehicle VB as a four-wheeled vehicle traveling in the straight traveling direction toward the intersection CS and a straight traveling vehicle VB' as a two-wheeled vehicle traveling behind the straight traveling vehicle VB or traveling in parallel with and next to the straight traveling vehicle VB at a blind angle seen from the right turning vehicle VA are present in different lanes among opposite lanes including two or more lanes and leading to the intersection CS. At this time, the straight traveling vehicle VB' as a two-wheeled vehicle is assumed to have a configuration similar to that of the straight traveling vehicle VB as a four-wheeled vehicle in regard to the notification. Also, as illustrated in Fig. 18, a case where both the two-wheeled vehicle and the four-wheeled vehicle are displayed as types of the right turning vehicle VA in the straight traveling vehicle VB is, for example, a case where a right turning vehicle VA as a four-wheeled vehicle traveling toward the intersection CS and a right turning vehicle VA' as a two-wheeled vehicle traveling behind the right turning vehicle VA or traveling in parallel with and next to the right turning vehicle VA at a blind angle seen from the straight traveling vehicle VB are present in different lanes in the traveling lanes including two or more lanes and leading to the intersection CS. At this time, the right turning vehicle VA' as a two-wheeled vehicle is assumed to have a configuration similar to that of the right turning vehicle VA as a four-wheeled vehicle in regard to the notification.

Moreover, the information VAT indicating the type of the right turning vehicle VA and the information VATD indicating the traveling direction of the right turning vehicle VA, as well as the information VBT indicating the type of the straight traveling vehicle VB and the information VBTD indicating the traveling direction of the straight traveling vehicle VB, are preferably displayed in a first color in a case where the risk of collision between the right turning vehicle VA and the straight traveling vehicle VB is low and are preferably displayed in a second color different from the first color in a case where the risk of the collision between the right turning vehicle VA and the straight traveling vehicle VB is high.

More specifically, only the colors displaying the information VBT indicating the type of the straight traveling vehicle VB and the information VBTD indicating the traveling direction of the straight traveling vehicle VB displayed on the display 141a of the HMI device 131a of the right turning vehicle VA are changed at once between a case where the risk of the collision between the right turning vehicle VA and the straight traveling vehicle VB is low and a case where the risk is high with the display positions of the information VBT and the information VBTD maintained. Similarly, regarding the information VAT indicating the type of the right turning vehicle VA and the information VATD indicating the traveling direction of the right turning vehicle VA displayed on the display 141b of the HMI device 131b of the straight traveling vehicle VB, the display positions of the information VAT and the information VATD are maintained, and only the colors displaying the information VAT and the information VATD are changed at once between the cases of low and high risk of collision between the right turning vehicle VA and the straight traveling vehicle VB. By doing so, the driver can determine the degree of danger only from the change in color without carefully looking at the screen.

Note that the first color is, for example, yellow while the second color is, for example, red. Moreover, the settings of the first color and the second color can be changed in accordance with drivers' preferences and color vision abilities. Additionally, the settings of the first color and the second color may differ depending on whether the time of day when the vehicles travel is daytime or nighttime. In this case, four colors are set in accordance with the time of day when the vehicles travel and the risk of collision between the right turning vehicle VA and the straight traveling vehicle VB for the information VAT indicating the type of the right turning vehicle VA and the information VATD indicating the traveling direction of the right turning vehicle VA, as well as the information VBT indicating the type of the straight traveling vehicle VB and the information VBTD indicating the traveling direction of the straight traveling vehicle VB. Furthermore, the information VBT and the information VBTD displayed in the right turning vehicle VA, as well as the information VAT and the information VATD displayed in the straight traveling vehicle VB, may be displayed in, for example, white, with the background displayed in the first color in a case where the risk of collision between the right turning vehicle VA and the straight traveling vehicle VB is low, and in the second color in a case where the risk is high. In other words, the colors displaying the information VBT and the information VBTD in the right turning vehicle VA, as well as the colors displaying the information VAT and the information VATD in the straight traveling vehicle VB, and the colors for displaying the backgrounds of such information may be inverted, and the background may be displayed in the first color or the second color in accordance with the risk of the collision between the right turning vehicle VA and the straight traveling vehicle VB.

In addition, each of the information VBT indicating the type of the straight traveling vehicle VB and the information VBTD indicating the traveling direction of the straight traveling vehicle VB is preferably displayed at least by illustration in the right turning vehicle VA, at a position adjacent to one end portion of a display region DAa that the display 141a of the HMI device 131a has in a lateral direction X, the position being located on the side of the driver seat of the right turning vehicle VA instead of being located at the center of the display region DAa in the lateral direction X. Furthermore, the information VAT indicating the type of the right turning vehicle VA is preferably displayed at least by illustration in the straight traveling vehicle VB, at a position adjacent to one end portion of a display region DAb that the display 141b of the HMI device 131b has in the lateral direction X, the position being located on the side of the driver seat of the straight traveling vehicle VB instead of being located at the center of the display region DAb in the lateral direction X. Additionally, in the straight traveling vehicle VB, the information VATD indicating the traveling direction of the right turning vehicle VA is preferably displayed at least by illustration at a position from one end portion of the display region DAb in the lateral direction X to the other end portion of the display region DAb in the lateral direction X through the center of the display region DAb in the lateral direction X, the position being located on the side of the driver seat of the straight traveling vehicle VB. Note that in the example illustrated in Fig. 15, the information VBTD indicating the traveling direction of the straight traveling vehicle VB includes information VBTD1 displayed by illustration and information VBTD2 displayed by text. In the example illustrated in Fig. 16, the information VATD indicating the traveling direction of the right turning vehicle VA includes VATD1 displayed by illustration and VATD2 displayed by text.

As mentioned above, the driver seat of the right turning vehicle VA is provided on the right side in the right turning vehicle VA while the driver seat of the straight traveling vehicle VB is provided on the right side in the straight traveling vehicle VB on the assumption of the left-hand traffic road R. Therefore, it becomes yet easier for the driver of the right turning vehicle VA to visually recognize information related to the straight traveling vehicle VB by displaying the information VBT indicating the type of the straight traveling vehicle VB and the information VBTD indicating the traveling direction (straight traveling direction) of the straight traveling vehicle VB, which are displayed in the display region DAa of the display 141a in the right turning vehicle VA, at least by illustration on the side of the driver seat of the right turning vehicle VA. Moreover, since the straight traveling vehicle information is displayed at least by illustration on the side of the driver seat of the right turning vehicle VA, that is, on the right side in the display region DAa, it becomes yet easier to visually recognize the information related to the straight traveling vehicle VB that is present in the opposite lane L22 located on the right side when seen from the right turning vehicle VA. Furthermore, it becomes yet easier for the driver of the straight traveling vehicle VB to visually recognize the information VAT indicating the type of the right turning vehicle VA traveling in the traveling lane L11 located on the right side when seen from the straight traveling vehicle VB by displaying the information VAT indicating the type of the right turning vehicle VA displayed in the display region DAb of the display 141b in the straight traveling vehicle VB at least by illustration on the side of the driver seat of the straight traveling vehicle VB. Additionally, displaying the information indicating the traveling direction (right turning direction) of the right turning vehicle VA displayed in the display region DAb at least by illustration in a long length over a wide range from one end portion of the display region DAb of the display 141b in the lateral direction X to the other end portion of the display region DAb in the lateral direction X through the center of the display region DAb in the lateral direction X makes it possible for the driver of the straight traveling vehicle VB to easily recognize that the right turning vehicle VA will turn right by glancing at the display 141b.

Moreover, the display 141a of the HMI device 131a in the right turning vehicle VA preferably includes a display region DAa that includes a first display region DAa1, a second display region DAa2, and a third display region DAa3, which are divided in order from the upper side. Furthermore, the display 141b of the HMI device 131b in the straight traveling vehicle VB preferably includes a display region DAb that includes a first display region DAb1, a second display region DAb2, and a third display region DAb3, which are divided in order from the upper side. In the right turning vehicle VA, it is preferable that the information VBT indicating the type of the straight traveling vehicle VB be displayed by illustration in the first display region DAa1, and the information VBTD indicating the traveling direction (straight traveling direction) of the straight traveling vehicle VB be displayed by illustration like the information VBTD1 in the second display region DAa2 and be displayed by text like the information VBTD2 in the third display region DAa3. Additionally, in the straight traveling vehicle VB, it is preferable that the information VAT indicating the type of the right turning vehicle VA be displayed by illustration in the first display region DAb1, and the information VATD indicating the traveling direction (right turning direction) of the right turning vehicle VA be displayed by illustration like the information VATD1 in the second display region DAb2 and be displayed by text like the information VATD2 in the third display region DAb3.

Specifically, visibility of the drivers is improved by displaying the information indicating the types of the vehicles by illustration in the first display regions DAa1 and DAb1 at the tops of the display regions DAa and DAb. Furthermore, the visibility of the drivers is further improved by displaying the information indicating the traveling directions of the vehicles by illustration in the second display regions DAa2 and DAb2 and displaying the information indicating the traveling directions of the vehicles by text in the third display regions DAa3 and DAb3. Thus, the driver of the right turning vehicle VA can understand the content of the notification related to the straight traveling vehicle VB merely by glancing at about 2/3 the content of the display in the first display region DAa1 and the second display region DAa2 or in the second display region DAa2 and the third display region DAa3. Similarly, the driver of the straight traveling vehicle VB can also understand the content of the notification related to the right turning vehicle VA merely by glancing at about 2/3 the content of the display in the first display region DAb1 and the second display region DAb2 or in the second display region DAb2 and the third display region DAb3.

Note that in the example illustrated in Fig. 15, the first display region DAa1, the second display region DAa2, and the third display region DAa3 are obtained by dividing the display regions DAa by two virtual lines VL1 and VL2 extending in parallel to the lateral direction X of the display region DAa. In the example illustrated in Fig. 16, the first display region DAb1, the second display region DAb2, and the third display region DAb3 are obtained by dividing the display region DAb by two virtual lines VL3 and VL4 extending in parallel to the lateral direction X of the display region DAb.

Also, in a case where the first notification issuance flag is turned from OFF to ON, and completion of passing of the right turning vehicle VA or the straight traveling vehicle VB through the intersection CS is detected on the basis of a result of specifying the current position Pa of the right turning vehicle VA on the road map and the current position Pb of the straight traveling vehicle VB on the road map by the road map storage units B113a and B113b when the notification issuance is being performed in the first predetermined mode, the first notification issuing units B118a and B118b preferably turn the first notification issuance flag from ON to OFF and end the notification issuance in the first predetermined mode. Furthermore, in a case where the second notification issuance flag is turned from OFF to ON and completion of passing of the right turning vehicle VA or the straight traveling vehicle VB through the intersection CS is detected on the basis of a result of specifying the current position Pa of the right turning vehicle VA on the road map and the current position Pb of the straight traveling vehicle VB on the road map by the road map storage units B113a and B113b when the notification issuance is being performed in the second predetermined mode, the second notification issuing units B119a and B119b preferably turn the second notification issuance flag from ON to OFF and end the notification issuance in the second predetermined mode. By doing so, the notification system 1 can reset the notification issuance condition met between the right turning vehicle VA and the straight traveling vehicle VB, confirm that a new notification condition has been met between the right turning vehicle VA and a straight traveling vehicle other than the straight traveling vehicle VB, for example, and perform new notification.

In addition, the first notification issuing units B118a and B118b preferably continue the notification issuance in the first predetermined mode even if the first notification issuance flag is turned from ON and OFF in a case where a specific period of time has not elapsed after the first notification issuance flag is turned from OFF to ON, and preferably end the notification issuance in the first predetermined mode if the first notification issuance flag is turned from ON to OFF in a case where the specific period of time has elapsed after the first notification issuance flag is turned from OFF to ON. Furthermore, the second notification issuing units B119a and B119b preferably continue the notification issuance in the second predetermined mode even if the second notification issuance flag is turned from ON to OFF in a case where a specific period of time has not elapsed after the second notification issuance flag is turned from OFF to ON, and preferably ends the notification issuance in the second predetermined mode if the second notification issuance flag is turned from ON to OFF in a case where the specific period of time has elapsed after the second notification issuance flag is turned from OFF to ON. By doing so, the notification through display is continued at least during a specific period of time after the first predetermined notification issuance condition or the second predetermined notification issuance condition is met and the content of the notification is displayed on the display 141a of the HMI device 131a in the right turning vehicle VA and the display 141b of the HMI device 131b in the straight traveling vehicle VB. In other words, it is possible to allow the drivers to accurately recognize the content of the notification by preventing the notifications through display from being repeated in a short period of time.

(Content of Notification Control in Right Turning Vehicle)

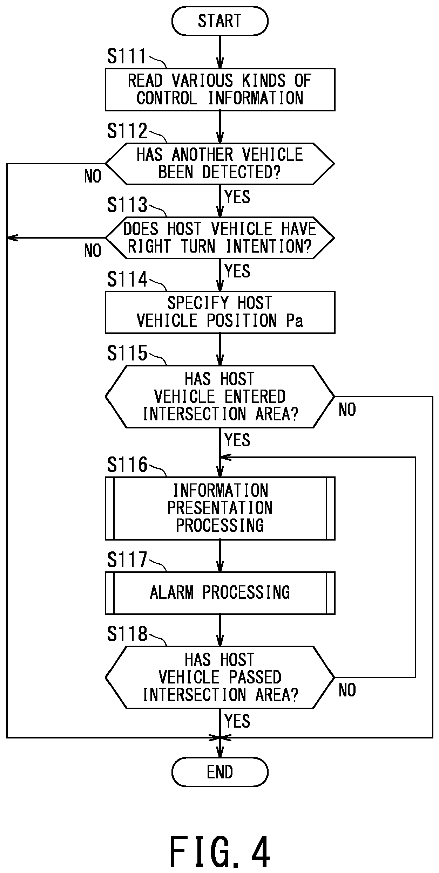

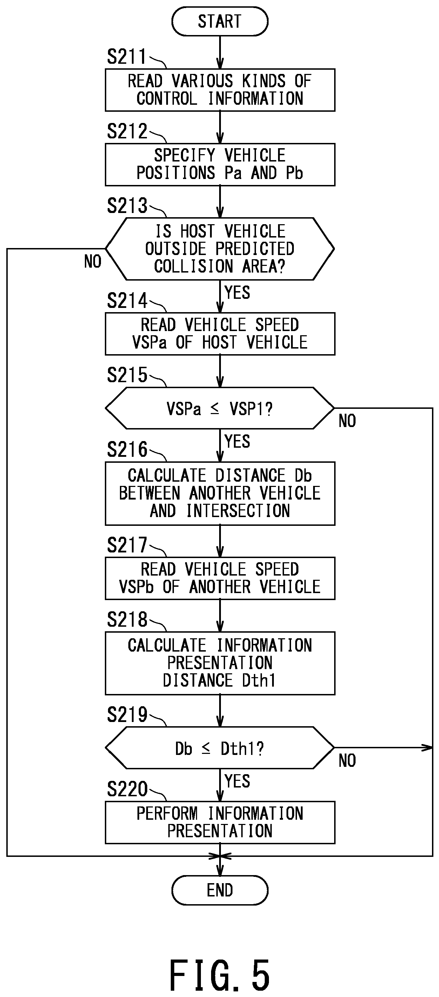

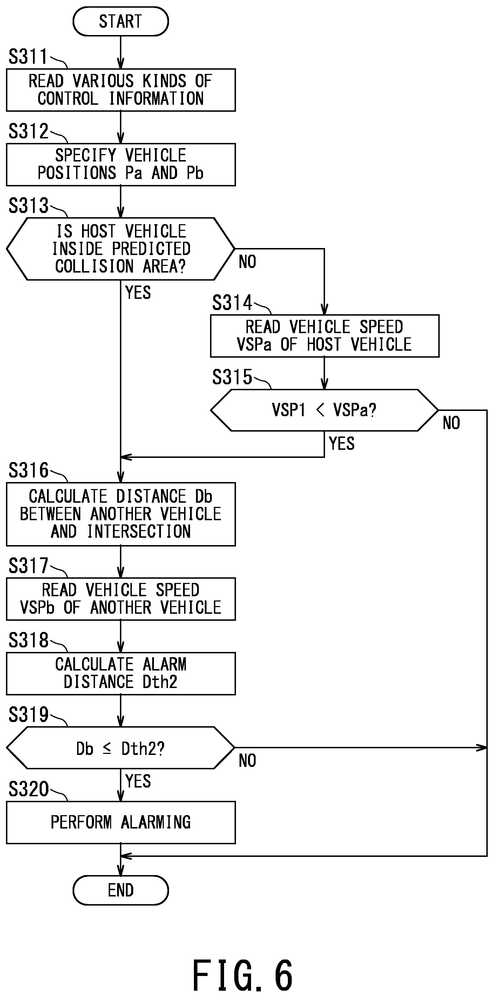

Figs. 4 to 6 are flowcharts illustrating content of notification control performed by the controller 101a included in the right turning vehicle VA. The flowchart in Fig. 4 illustrates an overall flow of the notification control, the flowchart in Fig. 5 illustrates content of processing (information presentation processing) executed by the right turning vehicle VA in regard to information presentation, and the flowchart in Fig. 6 illustrates content of processing (alarm processing) executed by the right turning vehicle VA in regard to an alarm. The information presentation processing and the alarm processing are performed as parts of the notification control. The controller 101a performs the notification control every predetermined time in a case where the intersection CS is detected in the road R in front of the host vehicle (that is, the right turning vehicle VA).

In the flowchart illustrated in Fig. 4, the controller 101a read various kinds of control information used for the notification control in S111. The control information read in S111 includes the current position Pa, the vehicle speed VSPa, the type, and the link ID of the right turning vehicle VA, which is a host vehicle, and the current position Pb, the vehicle speed VSPb, the type, and the link ID of the straight traveling vehicle VB, which is another vehicle. The control information may include information regarding operating statuses of the right turn signals in the right turning vehicle VA and the straight traveling vehicle VB.

In S112, the controller 101a determines whether or not the right turning vehicle VA has detected the straight traveling vehicle VB in the straight direction toward the intersection CS in the lane L22 opposite to the lane L11 in which the right turning vehicle VA is present. The detection of the straight traveling vehicle VB is based on the link ID of straight traveling vehicle VB. The processing proceeds to S113 in a case where the straight traveling vehicle VB is detected, or this control is ended in a case where the straight traveling vehicle VB is not detected.

In S113, the controller 101a determines whether or not a right turn intention of the right turning vehicle VA has been detected. The detection of the right turn intention is based on an operating status of the right turn signal of the right turning vehicle VA. Additionally or alternatively, it is also possible to make the determination on the basis of the link ID of the right turning vehicle VA. In a case where the right turn lane L11 is a lane only for right turn, for example, the right turn intention of the right turning vehicle VA may also be detected by the fact that the lane where the right turning vehicle VA is traveling is the right turn lane L11. The processing proceeds to S114 in a case where the right turn intention is detected, or this control is ended in a case where the right turn intention is not detected.

In S114, the controller 101a specifies the current position Pa of the right turning vehicle VA on the road map.

In S115, the controller 101a determines whether the right turning vehicle VA has entered the intersection area ACS. In a case where the right turning vehicle VA is located at a position of the outer edge of the intersection area ACS (that is, the first predetermined position P1) or is located at a position closer to the intersection center CTR than the position of the outer edge, and the right turning vehicle VA has entered the intersection area ACS, the processing proceeds to S116. On the other hand, in a case where the right turning vehicle VA has not entered the intersection area ACS and is located at a position farther from the intersection center CTR than the outer edge of the intersection area ACS, this control is ended.

In S116, the controller 101a performs the information presentation processing. The information presentation processing follows a procedure illustrated in the flowchart in Fig. 5.

In S117, the controller 101a performs the alarm processing. The alarm processing follows a procedure illustrated in the flowchart in Fig. 6.

In S118, the controller 101a determines whether or not the right turning vehicle VA has passed the intersection CS. The determination of whether or not the right turning vehicle VA has passed the intersection CS is made based on the fact that the right turning vehicle VA has left the intersection area ACS in the traveling direction after turning right. This control is ended in a case where the right turning vehicle VA has passed the intersection CS, or the processing returns to S116 to repeat the information presentation processing and the alarm processing until the right turning vehicle VA passes the intersection area ACS in a case where the right turning vehicle VA has not passed the intersection CS and is still in the intersection area ACS.

In the flowchart illustrated in Fig. 5, the controller 101a reads various kinds of control information used for the information presentation processing in S211. The control information read in S211 includes the current position Pa and the vehicle speed VSPa of the right turning vehicle VA and the current position Pb and the vehicle speed VSPb of the straight traveling vehicle VB.

In S212, the controller 101a specifies the current positions Pa and Pb of the right turning vehicle VA and the straight traveling vehicle VB on the road map.

In S213, the controller 101a determines whether or not the right turning vehicle VA is located outside the predicted collision area ACP. In a case where the right turning vehicle VA is located between the position of the outer edge of the intersection area ACS and the position of the outer edge of the predicted collision area ACP (that is, the second predetermined position P2) and is located outside the predicted collision area ACP, the processing proceeds to S214. When using the operating status of the right turn signal in order to detect the right turn intention of the right turning vehicle VA, the controller 101a may determine whether or not the operation of the right turn signal is being continued in addition to the processing in S213 and perform the processing in and after S214 in a case where the operation of the right turn signal is being continued. On the other hand, in a case where the right turning vehicle VA is located at the outer edge of the predicted collision area ACP or a position closer to the predicted collision point CPP than the outer edge and is not located outside the predicted collision area ACP, the information presentation processing is ended.

In S214, the controller 101a reads the vehicle speed VSPa of the right turning vehicle VA.

In S215, the controller 101a determines whether or not the vehicle speed VSPa of the right turning vehicle VA is equal to or less than a predetermined vehicle speed VSP1. The predetermined vehicle speed VSP1 is a low speed that is low enough to determine that the right turning vehicle VA is in a low-speed traveling state and is a reduced speed (specifically, 10 km/hour), for example. In the present embodiment, it is determined that the driver of the right turning vehicle VA is paying attention to the surrounding situation to pass the intersection CS by the fact that the vehicle speed VSPa is equal to or less than the predetermined vehicle speed VSP1. The processing proceeds to S216 in a case where the vehicle speed VSPa is equal to or less than the predetermined vehicle speed VSP1, or the information presentation processing is ended in a case where the vehicle speed VSPa is greater than the vehicle speed VSP1. The predetermined vehicle speed VSP1 may be 0 km/hour, and in other words, S215 may be processing of determining whether or not the right turning vehicle VA has temporarily stopped inside the intersection area ACS. Furthermore, it is also possible to eliminate the processing in S215 itself, and the notification issuance for an alarm may be prioritized over the notification issuance for the information presentation in a case where a notification issuance condition for the information presentation (S220) and the notification issuance condition for the alarm (S320) are established at the same time.

In this manner, in a case where the right turning vehicle VA has maintained the low vehicle speed VSPa until the arrival at the predicted collision area ACP or has sufficiently decelerated (including the case of temporarily stopping) after entering the intersection area ACS, the controller 101a of the present embodiment determines that a notification issuance timing for the information presentation (that is, the first notification issuance timing) has arrived on the basis of the detection of the vehicle speed VSPa that is equal to or less than the predetermined vehicle speed VSP1, performs the processing in and after S216 is performed, and determines whether or not the first predetermined notification issuance condition has been established. The notification issuance timing for the information presentation is not limited thereto, and it is possible to set the notification issuance timing for the information presentation on the basis of the entrance of the right turning vehicle VA to the intersection area ACS, in other words, on the basis of the right turning vehicle VA being located inside the intersection area ACS, without providing any limitations based on a driving state such as the vehicle speed VSPa.

In S216, the controller 101a calculates the distance from intersection CS to the straight traveling vehicle VB, in other words, a distance Db remaining in front of the straight traveling vehicle VB until arriving at the intersection CS (hereinafter, referred to as an "intersection arrival distance"). As illustrated in Fig. 12, the intersection arrival distance Db is calculated as the distance from the outer edge of the predicted collision area ACP to the straight traveling vehicle VB, and the calculation is based on the current position Pb of the straight traveling vehicle VB.

In S217, the controller 101a reads the vehicle speed VSPb of the straight traveling vehicle VB.

In S218, the controller 101a calculates the information presentation distance Dth1. The calculation of the information presentation distance Dth1 is based on the vehicle speed VSPb of the straight traveling vehicle VB and the first predetermined deceleration degree DEC1 as described above.

In S219, the controller 101a determines whether or not the intersection arrival distance Db of the straight traveling vehicle VB is equal to or less than the information presentation distance Dth1, in other words, whether or not the straight traveling vehicle VB is located at the information presentation distance Dth1 from the intersection CS or is located at a position closer to the intersection CS than the information presentation distance Dth1. The processing proceeds to S220 in a case where the intersection arrival distance Db is equal to or less than the information presentation distance Dth1, or the information presentation processing is ended in a case where the intersection arrival distance Db is greater than the information presentation distance Dth1.

In S220, the controller 101a performs notification issuance for information presentation.

In the flowchart illustrated in Fig. 6, the controller 101a reads various kinds of control information used for the alarm processing in S311. The control information read in S311 includes the current position Pa and the vehicle speed VSPa of the right turning vehicle VA and the current position Pb and the vehicle speed VSPb of the straight traveling vehicle VB.

In S312, the controller 101a specifies the current positions Pa and Pb of the right turning vehicle VA and the straight traveling vehicle VB on the road map.

In S313, the controller 101a determines whether or not the right turning vehicle VA is located inside the predicted collision area ACP. In a case where the right turning vehicle VA is located at the position of the outer edge of the predicted collision area ACP (that is, the second predetermined position P2) or is located at the position closer to the predicted collision point CPP than the position of the outer edge and the right turning vehicle VA is located inside the predicted collision area ACP, the processing proceeds to S316. On the other hand, in a case where the right turning vehicle VA is located at a position farther from the predicted collision point CPP than the outer edge of the predicted collision area ACP and is not located inside the predicted collision area ACP, the processing proceeds to S314. In a case where the operating status of the right turn signal is used to detect the right turn intention of the right turning vehicle VA, the fact that the operation of the right turn signal is being continued may be included as a condition of performing the processing as a premise of performing the processing in S313.

In S314, the controller 101a reads the vehicle speed VSPa of the right turning vehicle VA.

In S315, the controller 101a determines whether the vehicle speed VSPa of the right turning vehicle VA is higher than the predetermined vehicle speed VSP1. The processing proceeds to S316 in a case where the vehicle speed VSPa is greater than the predetermined vehicle speed VSP1, or the alarm processing is ended in a case where the vehicle speed VSPa is equal to or less than the predetermined vehicle speed VSP1. In other words, the controller 101a determines whether the vehicle speed VSPa of the right turning vehicle VA is greater than the vehicle speed VSP1 achieved in the low-speed traveling state, for example, a speed reduced state, and in a case where the vehicle speed VSPa is greater than the vehicle speed VSP1, the controller 101a determines that the driver of the right turning vehicle VA is not paying attention to the surrounding situation, and the processing proceeds to S316. On the other hand, in a case where the vehicle speed VSPa is equal to or less than the vehicle speed VSP1, the controller 101a determines that the notification should be issued for the information presentation in the situation and ends the alarm processing.

In this manner, the controller 101a determines that a notification issuance timing for an alarm (that is, the second notification issuance timing) has arrived on the basis of detection of a situation in which the right turning vehicle VA has arrived at the predicted collision area ACP and has already been in the predicted collision area ACP after entering the intersection area ACS or the right turning vehicle VA is traveling at a speed that is equal to or greater than a specific speed toward the predicted collision point CPP even outside the predicted collision area ACP and is approaching the predicted collision area ACP in S313 to S315, performs the processing in and after S316, and determines whether or not the second predetermined notification issuance condition is established.

In S316, the controller 101a calculates the intersection arrival distance Db of the straight traveling vehicle VB.

In S317, the controller 101a reads the vehicle speed VSPb of the straight traveling vehicle VB.

In S318, the controller 101a calculates the alarm distance Dth2. The calculation of the alarm distance Dth2 is based on the vehicle speed VSPb of the straight traveling vehicle VB and the second predetermined deceleration degree DEC2 as described above.

In S319, the controller 101a determines whether or not the intersection arrival distance Db of the straight traveling vehicle VB is equal to or less than the alarm distance Dth2, in other words, whether or not the straight traveling vehicle VB is located at the alarm distance Dth2 from the intersection CS or is located at a position closer to the intersection CS than the alarm distance Dth2. The processing proceeds to S320 in the case where the intersection arrival distance Db is equal to or less than the alarm distance Dth2, or the alarm processing is ended in a case where the intersection arrival distance Db is greater than the alarm distance Dth2.

In S320, the controller 101a performs the notification issuance for the alarm.

(Content of Notification Control in Straight Traveling Vehicle)

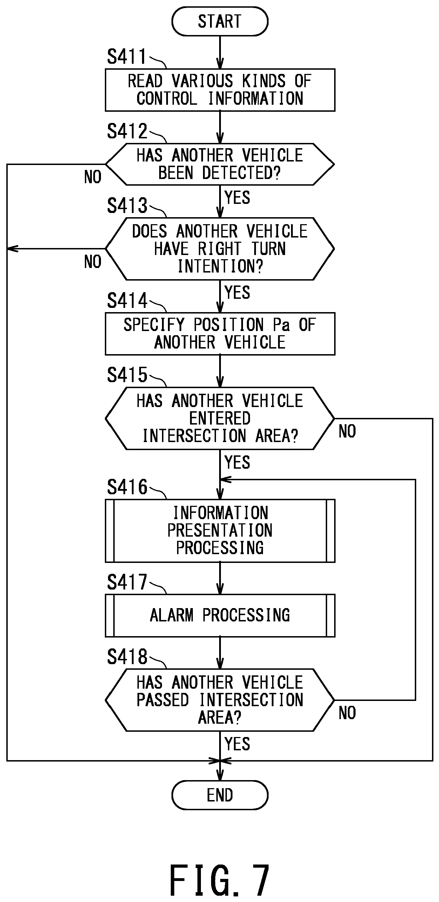

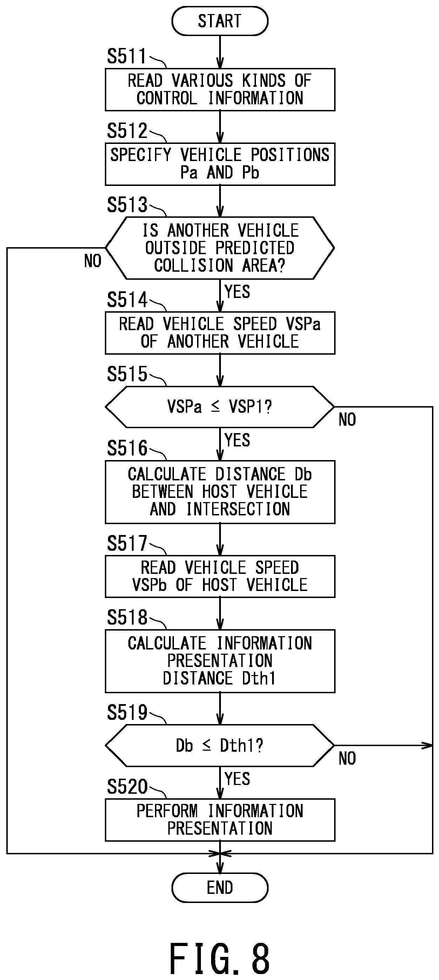

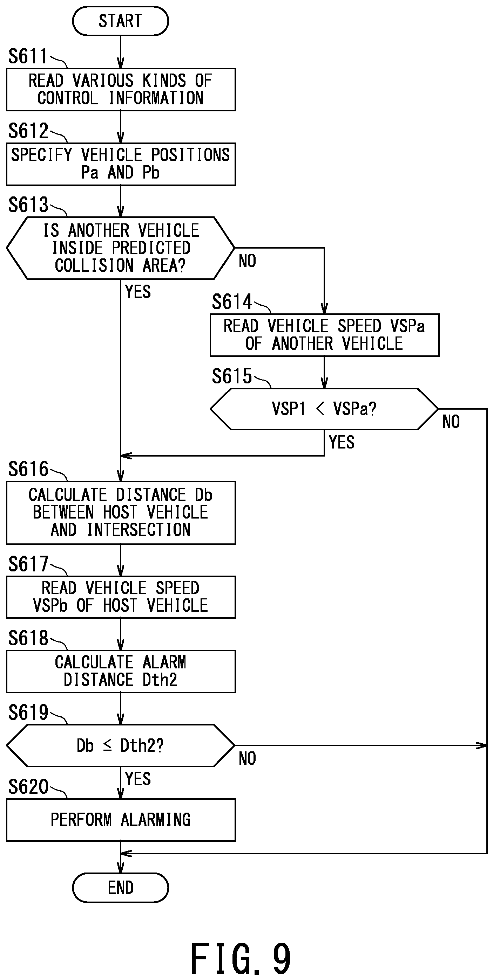

Figs. 7 to 9 are flowcharts illustrating content of notification control performed by the controller 101b included in the straight traveling vehicle VB. The flowchart in Fig. 7 illustrates an overall flow of the notification control, the flowchart in Fig. 8 illustrates content of the information presentation processing executed by the straight traveling vehicle VB, and the flowchart in Fig. 9 illustrates content of the alarm processing executed by the straight traveling vehicle VB. The controller 101b performs the notification control every predetermined time in a case where the intersection CS is detected in the road R in front of the host vehicle. The execution cycles of the notification control may be the same or different between the controller 101a and the controller 101b. Furthermore, both the controllers 101a and 101b can also perform the notification control in a synchronized manner.

Each process performed by the controller 101a and the controller 101b in regard to the notification control corresponds to each other. Therefore, detailed description of the processes that are similar for both will be omitted in the following description.

In the flowchart illustrated in Fig. 7, the controller 101b reads various kinds of control information used for the notification control (S411), detects another vehicle that is present in the right turn lane L11 in the opposite lanes, that is, the right turning vehicle VA (S412), and then determines whether or not the right turn intention of the right turning vehicle VA, which is another vehicle, has been detected in S413. After detecting the right turn intention, the controller 101b specifies the current position Pa of the right turning vehicle VA on the road map (S414), and determines whether or not the right turning vehicle VA has entered the intersection area ACS (S415). The controller 101b executes the procedure in and after S416 in a case where the right turning vehicle VA has entered the intersection area ACS, or ends this control in a case where the right turning vehicle VA has not entered the intersection area ACS. The controller 101b executes the information presentation processing in S416 and the alarm processing in S417. The information presentation processing and the alarm processing are repeated until the right turning vehicle VA passes the intersection area ACS.

In the flowchart illustrated in Fig. 8, the controller 101b reads various kinds of control information used for the information presentation processing, such as the current positions Pb and Pa of the straight traveling vehicle VB and the right turning vehicle VA (S511), and specifies the current positions Pb and Pa of the straight traveling vehicle VB and the right turning vehicle VA on the road map (S512). In S513, the controller 101b determines whether or not the right turning vehicle VA, which is another vehicle, is located outside the predicted collision area ACP, reads the vehicle speed VSPa of the right turning vehicle VA (S514) in a case where the controller 101b determines that the right turning vehicle VA is located outside the predicted collision area ACP, and determines whether or not the vehicle speed VSPa of the right turning vehicle VA is equal to or less than the predetermined vehicle speed VSP1 (S515). The controller 101b performs the processing in and after S516 in a case where the vehicle speed VSPa is equal to or less than the predetermined vehicle speed VSP1, or ends the information presentation processing in a case where the vehicle speed VSPa is greater than the predetermined vehicle speed VSP1. When using the operating status of the right turn signal in order to detect the right turn intention of the right turning vehicle VA, the controller 101b may determine whether or not the operation of the right turn signal is being continued in addition to the processing in S513, and execute the processing in and after S514 in a case where the operation of the right turn signal is being continued. Then, the controller 101b calculates the intersection arrival distance Db of the straight traveling vehicle VB, which is the host vehicle (S516), reads the vehicle speed VSPb of the host vehicle (that is, the straight traveling vehicle VB) (S517), and calculates the information presentation distance Dth1 (S518). The processing proceeds to S520 to issue a notification for information presentation in a case where the intersection arrival distance Db is equal to or less than the information presentation distance Dth1 (S519), or the information presentation processing is ended in a case where the intersection arrival distance Db is greater than the information presentation distance Dth1.

In the flowchart illustrated in Fig. 9, the controller 101b reads various kinds of control information used for the alarm processing such as the current positions Pb and Pa of the straight traveling vehicle VB and the right turning vehicle VA (S611), and specifies the current positions Pb and Pa of the straight traveling vehicle VB and the right turning vehicle VA on the road map are (S612). The controller 101b determines whether or not the right turning vehicle VA, which is another vehicle, is located inside the predicted collision area ACP, in S613, reads the vehicle speed VSPa of the right turning vehicle VA (S614) in a case where the right turning vehicle VA is determined not to be located inside the predicted collision area ACP, and determines whether or not the vehicle speed VSPa of the right turning vehicle VA is greater than the predetermined vehicle speed VSP1 (S615). The controller 101b performs the processing in and after S616 in a case where the vehicle speed VSPa is greater than the predetermined vehicle speed VSP1, or ends the alarm processing in a case where the vehicle speed VSPa is equal to or less than the predetermined vehicle speed VSP1. In a case where the operating status of the right turn signal is used to detect the right turn intention of the right turning vehicle VA, the fact that the operation of the right turn signal is being continued may be included in the condition of performing the processing as a premise of performing the processing in S613. Then, the controller 101b calculates the intersection arrival distance Db of the straight traveling vehicle VB, which is a host vehicle (S616), reads the vehicle speed VSPb of the host vehicle (that is, the straight traveling vehicle VB) (S617), and calculates the alarm distance Dth2 (S618). The processing proceeds to S620 to issue a notification for the alarm in a case where the intersection arrival distance Db is equal to or less than the alarm distance Dth2, or the alarm processing is ended in a case where the intersection arrival distance Db is greater than the alarm distance Dth2.

(Description of Actions and Effects)

The vehicle notification system 1 according to the present embodiment has the aforementioned configuration. Effects obtained by the present embodiment will be described below.

First, in a traffic situation where the right turning vehicle VA turning right at the intersection CS and the straight traveling vehicle VB traveling in the straight direction toward the intersection CS in the opposite lane L22 are present, the current position Pa of the right turning vehicle VA on the road map and the current position Pb of the straight traveling vehicle VB on the road map are specified. Then, notifications in different modes are issued under the condition that the notification issuance condition related to the distance Db of the straight traveling vehicle VB is established at each of a timing at which presence of the right turning vehicle VA at the first predetermined position P1 or a position closer to the intersection center CTR than the first predetermined position P1 is detected after the right turn intention of the right turning vehicle VA is detected and a timing at which the right turning vehicle VA is traveling toward the predicted collision point CPP at a position closer to the predicted collision point CPP than the first predetermined position P1 or enters to a position closer to the predicted collision point CPP than the second predetermined position P2. It is thus possible to realize a notification in an appropriate mode in accordance with the relative relationship between the right turning vehicle VA and the straight traveling vehicle VB.

Specifically, the notification in the first predetermined mode is issued to the traffic participants under the condition that the straight traveling vehicle VB is located at the first predetermined distance, that is, the information presentation distance Dth1 from the intersection CS or is present at a position closer to the intersection CS than the information presentation distance Dth1 at a timing at which the right turning vehicle VA is located at a position with a relatively long distance left to the predicted collision point CPP after the detection of the right turn intention. In the present embodiment, both the right turning vehicle VA and the straight traveling vehicle VB are considered the traffic participants as targets of notification issuance.

On the other hand, a notification in the second predetermined mode, which is different from the first predetermined mode, is issued to the traffic participants under the condition that the straight traveling vehicle VB is located at a position closer to the intersection CS, that is, at the second predetermined distance (alarm distance Dth2) from the intersection CS or is present at a position closer to the intersection CS than the alarm distance Dth2 in a case where the right turning vehicle VA is still continuing to travel even after passing the position of the first predetermined distance P1 or has approached the position closer to the predicted collision point CPP.

In this manner, the notification issuance for the purpose of promoting recognition of the presence of the counterpart vehicle (the straight traveling vehicle VB for the right turning vehicle VA, for example), that is, the notification issuance for the information presentation is executed as the first predetermined mode, and the notification issuance for the purpose of promoting recognition of higher urgency, that is, the notification issuance for the alarm is executed as the second predetermined mode, in accordance with the relative positional relationship between the right turning vehicle VA and the straight traveling vehicle VB, for example.

Second, it is possible to promote the drivers to quickly and easily understand notification issuance and content thereof by issuing the notification using display and differentiating the display between the first predetermined mode and the second predetermined mode. Moreover, it is possible to further promote the drivers to quickly and easily understand notification issuance and content thereof by issuing the notification using sound, in addition to issuing the notification using the display, and differentiating the sound between the first predetermined mode and the second predetermined mode.

Third, it is possible to easily determine the timing at which the notification issuance in the first predetermined mode and the notification issuance in the second predetermined mode are to be executed and to execute the notification issuance by the intersection area ACS and the predicted collision area ACP being set.

Fourth, it is possible to execute the notification issuance in each of the first and second predetermined modes at an appropriate timing that reflects the distance required to decelerate and brake the straight traveling vehicle VB by calculating the first and second predetermined distances (the information presentation distance Dth1 and the alarm distance Dth2) on the basis of the vehicle speed VSPb of the straight traveling vehicle VB.

Fifth, it is possible to execute the notification issuance in each of the first and second predetermined modes at a timing according to the behavior of the vehicle at the time of causing the brake to work by setting the deceleration degree DEC1 for calculating the information presentation distance and the deceleration degree DEC2 for calculating the alarm distance, which is higher than the deceleration degree DEC1, and calculating the first and second predetermined distances on the basis of the deceleration degrees DEC1 and DEC2 along with the vehicle speed VSPb of the straight traveling vehicle VB.

Sixth, it is possible to perform notification issuance in the first predetermined mode at a timing on the assumption of slower braking and to perform the notification issuance in the second predetermined mode at a timing on the assumption of sudden breaking by setting the deceleration degree DEC2 for calculating the alarm distance to be higher than the deceleration degree DEC1 for calculating the information presentation distance.

Seventh, it is possible to more appropriately calculate the timing at which the notification issuance for each of the information presentation and the alarm is actually performed such that a trend (a degree of slowness or suddenness, for example) of the braking operation that the driver actually performs is reflected, and it is possible to execute the notification issuance in each mode at a more appropriate timing, by learning the actual deceleration degree of the straight traveling vehicle VB for the notification issuance in the second predetermined mode and correcting the deceleration degrees DEC1 and DEC2 used to calculate each of the information presentation distance Dth1 and the alarm distance Dth2 on the basis of the thus obtained learning value.

Here, it is possible to avoid a situation in which the notification issuance is unnecessarily executed in a case where the display of entrance to the right turn lane L11 or the like is not based on the original right turn intention and the entrance is only temporarily made, by detecting the right turn intention in a case where the right turn intention displayed by the entrance to the right turn lane L11 or the operation of the right turn signal or the like continues for a predetermined period of time or more. In a case where another vehicle is stopping at a roadside of a road extending after the intersection CS or an obstacle installed on the road such as a sign is present, for example, lanes may be changed before or after the entrance to the intersection for the purpose of avoiding collision against the obstacle. The right turn intention is not detected in such a case, the right turning vehicle VA ends the control on the basis of negative determination in S113 illustrated in Fig. 4, and the straight traveling vehicle VB ends the control on the basis of negative determination in S413 illustrated in Fig. 7, to thereby avoid the unnecessary notification issuance.

In contrast, in a case of right turn based on the original right turn intention, the right turning vehicle VA has been decelerated before entering the intersection CS, and some period of time is secured before the entrance to the intersection CS after the display of the right turn intention. Therefore, there are no substantial adverse effects in the detection of the right turn intention even if the continued display of the right turn intention is used as the condition for detecting the right turn intention, and it is possible to appropriately detect that the right turning vehicle VA has the right turn intention.

In addition, it is possible to issue a notification with higher urgency with a higher priority and to promote the driver to accurately recognize the situation by prioritizing the notification issuance for the alarm than the notification issuance for the information presentation in a case where the notification issuance condition for the information presentation and the notification issuance condition for the alarm are established at the same time.

The traffic participants as targets of the notification issuance are not limited to the right turning vehicle VA and the straight traveling vehicle VB and may be any other vehicles that are approaching the intersection CS. It is possible to exemplify, as such vehicles, a vehicle traveling toward the intersection CS (hereinafter, referred to as a "crossing vehicle") in a lane other than the right turn lane L11 and lanes extending in parallel to the right turn lane L11 (for example, the straight lane L12), specifically, a crossing lane intersecting the right turn lane L11 from among lanes leading to the intersection CS to which the right turning vehicle VA is directed. Here, a vehicle other than the right turning vehicle VA that is approaching an intersection CS and may enter the intersection CS is referred to as an "intersection-entering vehicle". Intersection-entering vehicles include the straight traveling vehicle VB and crossing vehicles.

In the road R illustrated in Fig. 11, a traffic situation in which vehicles traveling toward the intersection CS includes a crossing vehicle (not shown) in addition to the right turning vehicle VA and the straight traveling vehicle is assumed. In this situation, when a traffic signal to regulate passing of the crossing vehicle that enters the intersection CS is not installed, there is a concern that the timing at which the crossing vehicle enters the intersection CS and the timings at which the right turning vehicle VA and the straight traveling vehicle VB enter the intersection CS may become the same and these vehicles may be brought into contact with or collide against each other at the intersection CS.

In such a situation, the notification system 1 monitors the relative positional relationship between the right turning vehicle VA and the crossing vehicle in addition to or instead of the control related to the notification between the right turning vehicle VA and the straight traveling vehicle VB after detecting the right turn intention of the right turning vehicle VA. Then, similarly to the above description, the notification issuance in accordance with urgency of the situation related to contact or collision between the right turning vehicle VA and the crossing vehicle is executed at an appropriate timing before the right turning vehicle VA passes the intersection CS after approaching the intersection CS. For example, the right turning vehicle VA and the crossing vehicle perform information presentation processing and alarm processing similar to those performed between the right turning vehicle VA and the straight traveling vehicle VB.

Moreover, the notification system 1 according to the present embodiment includes the notification issuing units B118a, B118b, B119a, and B119b that display the information VBT indicating the type of the straight traveling vehicle VB, which is the counterpart vehicle, and the information VBTD indicating the traveling direction of the straight traveling vehicle VB on the display 141a in the right turning vehicle VA and display the information VAT indicating the type of the right turning vehicle VA, which is the counterpart vehicle, and the information VATD indicating the traveling direction of the right turning vehicle VA on the display 141b in the straight traveling vehicle VB on the basis of the right turning vehicle information and the straight traveling vehicle information that can be shared between the right turning vehicle VA and the straight traveling vehicle VB via communication between the right turning vehicle VA and the straight traveling vehicle VB at the time of the notification issuance. Limiting the content of the notification to be displayed in the right turning vehicle VA and the straight traveling vehicle VB to minimum necessary information, which is information indicating the types and the traveling directions of the counterpart vehicles, makes it easier for the drivers to understand the content of the notification. Moreover, it is possible to display the content of the notification by illustration or text with a relatively large size, for example, by limiting the information to minimum necessary information. In other words, it is possible to improve visibility of the drivers by displaying the content of the notification by illustration or text with a relatively large size. Therefore, the notification system 1 can allow the drivers to accurately recognize the content of the notification in a short period of time without hindering driving of the drivers.

Furthermore, the information VAT indicating the type of the right turning vehicle VA, which is the counterpart vehicle of the straight traveling vehicle VB, includes at least any one of a two-wheeled vehicle and a four-wheeled vehicle, and the information VBT indicating the type of the straight traveling vehicle VB, which is the counterpart vehicle of the right turning vehicle VA, also includes at least any one of a two-wheeled vehicle and a four-wheeled vehicle in the notification system 1 according to the present embodiment. Therefore, the notification system 1 can allow the driver of the right turning vehicle VA to grasp which of the two-wheeled vehicle and the four-wheeled vehicle the straight traveling vehicle VB that is present at a blind angle when seen from the right turning vehicle VA is and allow the driver of the straight traveling vehicle CB to grasp which of the two-wheeled vehicle and the four-wheeled vehicle the right turning vehicle VA that is present at a blind angle when seen from the straight traveling vehicle VB is.

Moreover, the information VAT indicating the type of the right turning vehicle VA and the information VATD indicating the traveling direction of the right turning vehicle VA, as well as the information VBT indicating the type of the straight traveling vehicle VB and the information VBTD indicating the traveling direction of the straight traveling vehicle VB, are displayed in a first color in a case where the risk of collision between the right turning vehicle VA and the straight traveling vehicle VB is low, and in a second color that is different from the first color in a case where the risk of collision between the right turning vehicle VA and the straight traveling vehicle VB is high in the notification system 1 according to the present embodiment. Therefore, the notification system 1 can allow the drivers to recognize the degrees of danger merely by the change in colors without focusing on the screens. Thus, the notification system 1 can enable the drivers to make quick determination for driving in danger.

Moreover, the notification system 1 according to the present embodiment displays each of the information VBT indicating the type of the straight traveling vehicle VB and the information VBTD indicating the traveling direction of the straight traveling vehicle VB at least by illustration at a position adjacent to one end portion of the display region DAa that the display 141a of the HMI device 131a has in the lateral direction X, the position being located on the side of the driver seat of the right turning vehicle VA instead of being located at the center of the display region DAb in the lateral direction X, in the right turning vehicle VA, which is the counterpart vehicle of the straight traveling vehicle VB. Furthermore, the notification system 1 displays the information VAT indicating the type of the right turning vehicle VA at least by illustration at a position adjacent to one end portion of the display region DAb that the display 141b of the HMI device 131b has in the lateral direction X, the position being located on the side of the driver seat of the straight traveling vehicle VB instead of being located at the center of the display region DAb in the lateral direction X, in the straight traveling vehicle VB which is the counterpart vehicle of the right turning vehicle VA. Additionally, the notification system 1 displays the information VATD indicating the traveling direction of the right turning vehicle VA at least by illustration at a position from the one end portion of the display region DAb in the lateral direction X to the other end portion of the display region DAb in the lateral direction X across the center of the display region DAb in the lateral direction X, the position being located on the side of the driver seat of the straight traveling vehicle VB, in the straight traveling vehicle VB. Therefore, the notification system 1 can allow the drivers to considerably easily recognize the information indicating the types of the counterpart vehicles and the information indicating the traveling directions of the counterpart vehicles.

The notification system 1 according to the present embodiment includes the displays 141a and 141b that include display regions DAa and DAb including the first display regions DAa1 and DAb1, the second display regions DAa2 and DAb2, and the third display regions DAa3 and DAb3 divided in order from the upper side. In the right turning vehicle VA, which is the counterpart vehicle of the straight traveling vehicle VB, the information VBT indicating the type of the straight traveling vehicle VB is displayed by illustration in the first display region DAa1, and the information VBTD of the traveling direction of the straight traveling vehicle VB is displayed by illustration in the second display region DAa2 and is displayed by text in the third display region DAa3. Furthermore, in the straight traveling vehicle VB, which is the counterpart vehicle of the right turning vehicle VA, the information VAT indicating the type of the right turning vehicle VA is displayed by illustration in the first display region DAb1, and the information VATD indicating the traveling direction of the right turning vehicle VA is displayed by illustration in the second display region DAb2 and is displayed by text in the third display region DAb3. Therefore, the notification system 1 can allow the driver of the right turning vehicle VA to recognize the content of the notification related to the straight traveling vehicle VB merely by glancing at about 2/3 the content displayed in the first display region DAa1 and the second display region DAa2 or in the second display region DAa2 and the third display region DAa3. Also, the notification system 1 can allow the driver of the straight traveling vehicle VB to recognize the content of the notification related to the right turning vehicle VA merely by glancing at about 2/3 the content displayed in the first display region DAb1 and the second display region DAb2 or in the second display region DAb2 and the third display region DAb3.

Moreover, the notification system 1 according to the present embodiment includes the notification issuing units B118a, B118b, B119a, and B119b that turn the predetermined notification issuance flag from ON to OFF and end the notification issuance in a case where the predetermined notification issuance flag is turned from OFF to ON and completion of passing of the right turning vehicle VA or the straight traveling vehicle VB through the intersection CS is detected on the basis of results of specification by the road map storage units B113a and B113b when the notification issuance is being performed. Thus, the notification system 1 can reset the notification issuance condition met between the right turning vehicle VA and the straight traveling vehicle VB, confirm that a new notification issuance condition has been met between the right turning vehicle VA and a straight traveling vehicle other than the straight traveling vehicle VB, for example, and performs new notification issuance. In other words, the notification system 1 can prepare for notification for the next new intersection CS and confirm that a notification condition with a vehicle following a vehicle that has passed the intersection CS is met.

Furthermore, the notification system 1 according to the present embodiment includes the notification issuing units B118a, B118b, B119a, and B119b that continue the notification issuance even if the predetermined notification issuance flag is turned from ON to OFF in a case where a specific period of time has not elapsed after the predetermined notification issuance flag is turned from OFF to ON, and end the notification issuance if the predetermined notification issuance flag is turned from ON to OFF in a case where the specific period of time has elapsed after the predetermined notification issuance flag is turned from OFF to ON. Therefore, the notification system 1 can prevent execution and non-execution of the notification through display from being repeated in a short period of time and allow the drivers to accurately recognize the content of the notification.

In the above description, the distance from the outer edge of the predicted collision area ACP, specifically, the intersecting point between the traveling path TRb of the straight traveling vehicle VB and the circle (the circles illustrated by the dashed lines in Figs. 12 and 13) defining the outer edge of the predicted collision area ACP to the straight traveling vehicle VB is employed as the distance Db from the intersection CS to the straight traveling vehicle VB. The distance Db is not limited thereto, and the distance from the predicted collision point CPP to the straight traveling vehicle VB may be employed, or the distance along the center line of the opposite lane L22 from the right turning vehicle VA to the straight traveling vehicle VB may be employed, as the distance Db.

Furthermore, although the controllers 101a and 101b included in the right turning vehicle VA and the straight traveling vehicle VB, respectively constitute the calculation unit of the notification system 1 and the controllers 101a and 101b constitute one virtual controller, a configuration in which roadside equipment or a remote server is caused to have the road map and a computer program for the notification control and is caused to perform the notification control outside the vehicles may also be adopted. In this case, the right turning vehicle VA and the straight traveling vehicle VB transmit position information of the respective vehicles to the external controller through road-to-vehicle communication and receive command signals which are results of calculation related to control. Then, the notification issuance for the information presentation or the alarm is executed on the basis of the command signals.

Moreover, in the above description, a traffic situation where the right turning vehicle VA traveling toward a predetermined section of the left-hand traffic road R to turn right at the predetermined section and the straight traveling vehicle VB traveling in the straight traveling direction toward the predetermined section in the opposite lane L22 that is opposite to the traveling lane L11 where the right turning vehicle VA travels are present is assumed. As mentioned above, the notification system 1 can be applied not only to left-hand traffic roads but also to right-hand traffic roads.

In other words, the notification system 1 according to the present embodiment is a vehicle notification system that performs notification issuance for traffic participants including a host vehicle VA that is present in a traveling lane L11 leading to an intersection CS to turn right or left at the intersection CS and another vehicle VB that travels in a straight traveling direction toward the intersection in a lane L22 opposite to the traveling lane L11. The notification system 1 includes the notification issuing units B118a, B118b, B119a and B119b that perform notification issuance at least through display via the HMI devices 131a and 131b as output sections to avoid collision between the host vehicle and the other vehicle. The HMI devices 131a and 131b include the displays 141a and 141b as display sections configured to be able to switch the display on the screens between an orientation indicating straight traveling of the vehicles and an orientation indicating right or left turning of the vehicles in the notification issuance. Therefore, the notification system 1 according to the present embodiment can provide a notification through display of the information VBTD indicating the traveling direction (straight traveling direction) of the straight traveling vehicle VB on the display 141a in the right turning vehicle VA on the assumption of the left-hand traffic road R. Also, the notification system 1 can provide a notification through display of the information VATD indicating the traveling direction (right turning direction) of the right turning vehicle VA on the display 141b in the straight traveling vehicle VB on the assumption of the left-hand traffic road R. Furthermore, since the notification system 1 can also provide a notification to display the orientation indicating left turning of the vehicle, the notification system 1 can also provide a notification through display similar to that in the case of the left-hand traffic road R for a left turning vehicle VA traveling toward an intersection CS on a right-hand traffic road and a straight traveling vehicle VB traveling in the straight traveling direction toward the intersection CS in a lane L22 opposite to a traveling lane L11 where the left turning vehicle is traveling.

While certain embodiments have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

REFERENCE SIGNS LIST

| | |
|---|---|
| 1 | vehicle notification system |
| 101a, 101b | controller |
| 111a, 111b | position sensor |
| 112a, 112b | vehicle speed sensor |
| 113a, 113b | right turn signal switch |
| 114a, 114b | steering angle sensor |
| 121a, 121b | transmitter |
| 122a, 122b | receiver |

131a, 131b    human machine interface device (HMI device)
141a, 141b    display

**Claims**

1. A vehicle notification system (1) that performs notification issuance for traffic participants including a first vehicle (VA) that is present in a traveling lane (L11) leading to an intersection (CS) to turn right or left at the intersection (CS) and a second vehicle (VB) that travels in a straight traveling direction toward the intersection (CS) in a lane (L22) opposite to the traveling lane (L11), the vehicle notification system (1) comprising:

   a notification issuing unit (B118a, B118b, B119a, B119b) that performs the notification issuance through display via a display unit (141a, 141b) that an output unit (131a, 131b) includes to avoid collision between the first vehicle (VA) and the second vehicle (VB),
   wherein the notification issuing unit (B118a, B118b, B119a, B119b) displays information (VBT) indicating a type of the second vehicle (VB) and information (VBTD) indicating a traveling direction of the second vehicle (VB) on the display unit (141a) in the first vehicle (VA) and displays information (VAT) indicating a type of the first vehicle (VA) and information (VATD) indicating a traveling direction of the first vehicle (VA) on the display unit (141b) in the second vehicle (VB) on the basis of first vehicle information related to the first vehicle (VA) and second vehicle information related to the second vehicle (VB) that are shared between the first vehicle (VA) and the second vehicle (VB) via communication between the first vehicle (VA) and the second vehicle (VB) at a time of the notification issuance.

2. The vehicle notification system (1) according to claim 1,

   wherein the information (VAT) indicating the type of the first vehicle (VA) includes at least any one of a two-wheeled vehicle and a four-wheeled vehicle, and
   the information (VBT) indicating the type of the second vehicle (VB) includes at least any one of a two-wheeled vehicle and a four-wheeled vehicle.

3. The vehicle notification system (1) according to claim 1 or 2,

   wherein the information (VAT) indicating the type of the first vehicle (VA) and the information (VATD) indicating the traveling direction of the first vehicle (VA) as well as the information (VBT) indicating the type of the second vehicle (VB) and the information (VBTD) indicating the traveling direction of the second vehicle (VB)
   are displayed in a first color in a case where a risk of collision between the first vehicle (VA) and the second vehicle (VB) is low, and
   are displayed in a second color that is different from the first color in a case where the risk of the collision between the first vehicle (VA) and the second vehicle (VB) is high.

4. The vehicle notification system (1) according to any one of claims 1 to 3,

   wherein a driver seat of the first vehicle (VA) is provided on a right side or a left side in the first vehicle (VA),
   a driver seat of the second vehicle (VB) is provided on a right side or a left side in the second vehicle (VB),
   each of the information (VBT) indicating the type of the vehicle (VB) and the information (VBTD) indicating the traveling direction of the second vehicle (VB) is displayed at least by illustration in the first vehicle (VA), at a position adjacent to one end portion of a display region (DAa) that the display unit (141a) has in a lateral direction, the position being located on a side of the driver seat of the first vehicle (VA) instead of being located at a center of the display region (DAa) in the lateral direction, and
   in the second vehicle (VB), the information (VAT) indicating the type of the first vehicle (VA) is displayed at least by illustration at a position adjacent to one end portion of a display region (DAb) that the display unit (141b) has in a lateral direction, the position being located on a side of the driver seat of the second vehicle (VB) instead of being located at a center of the display region (DAb) in the lateral direction, and the information (VATD) indicating the traveling direction of the first vehicle (VA) is displayed at least by illustration at a position from the one end portion of the display region (DAb) in the lateral direction to another end portion of the display region (DAb) in the lateral direction through the center of the display region (DAb) in the lateral direction, the position being located on the side of the driver seat of the second vehicle (VB) instead of being located at the center of the display region in the lateral direction.

5. The vehicle notification system (1) according to any one of claims 1 to 4,

wherein the display unit (141a, 141b) includes display region (DAa, DAb) that includes a first display region (DAa1, DAb1), a second display region (DAa2, DAb2), and a third display region (DAa3, DAb3) divided in order from an upper side,
the information (VBT) indicating the type of the second vehicle (VB) is displayed by illustration in the first display region (DAa1) and the information (VBTD) indicating the traveling direction of the second vehicle (VB) is displayed by illustration in the second display region (DAa2) and by text in the third display region (DAa3) in the first vehicle (VA), and
the information (VAT) indicating the type of the first vehicle (VA) is displayed by illustration in the first display region (DAb1) and the information (VATD) indicating the traveling direction of the first vehicle (VA) is displayed by illustration in the second display region (DAb2) and by text in the third display region (DAb3) in the second vehicle (VB).

6. The vehicle notification system (1) according to any one of claims 1 to 5, comprising:

a road map storage unit (B113a, B113b) that stores a road map including the intersection (CS) and specifies a current position of the first vehicle (VA) on the road map and a current position of the second vehicle (VB) on the road map,
wherein the notification issuing unit (B118a, B118b, B119a, B119b)

performs the notification issuance in a case where a predetermined notification issuance flag is ON and does not perform the notification issuance in a case where the predetermined notification issuance flag is OFF, and
in a case where the predetermined notification issuance flag is turned from OFF to ON and completion of passing of the first vehicle (VA) or the second vehicle (VB) through the intersection (CS) is detected on the basis of a specification result of the road map storage unit (B113a, B113b) when the notification issuance is being performed, the predetermined notification issuance flag is turned from ON to OFF, and the notification issuance is ended.

7. The vehicle notification system (1) according to any one of claims 1 to 6,

wherein the notification issuing unit (B118a, B118b, B119a, B119b)
performs the notification issuance in a case where a predetermined notification issuance flag is ON and does not perform the notification issuance in a case where the predetermined notification issuance flag is OFF,
continues the notification issuance even if the predetermined notification issuance flag is turned from ON to OFF in a case where a specific period of time has not elapsed after the predetermined notification issuance flag is turned from OFF to ON, and
ends the notification issuance if the predetermined notification issuance flag is turned from ON to OFF in a case where the specific period of time has elapsed after the predetermined notification issuance flag is turned from OFF to ON.

8. A vehicle notification system (1) that performs notification issuance for traffic participants including a host vehicle (VA) that is present in a traveling lane (L11) leading to an intersection (CS) to turn right or left at the intersection (CS) and another vehicle (VB) that travels in a straight traveling direction toward the intersection (CS) in a lane (L22) opposite to the traveling lane (L11), the vehicle notification system (1) comprising:

a notification issuing unit (B118a, B118b, B119a, B119b) that performs the notification issuance at least through display via an output unit (131a, 131b) to avoid collision between the host vehicle (VA) and the another vehicle (VB),
wherein the output unit (131a, 131b) includes a display unit (141a, 141b) configured to switch display on a screen between an orientation indicating straight traveling of a vehicle and an orientation indicating right or left turn of the vehicle in the notification issuance.

FIG. 1

EP 4 708 251 A1

FIG. 2

FIG. 3

```
                    ( START )
                        │
S111                    ▼
          ┌──────────────────────────┐
          │  READ VARIOUS KINDS OF   │
          │    CONTROL INFORMATION   │
          └──────────────────────────┘
                        │
S112                    ▼
          ╱──────────────────────────╲
   NO   ╱   HAS ANOTHER VEHICLE        ╲
◄───────       BEEN DETECTED?
         ╲                            ╱
          ╲──────────────────────────╱
                        │ YES
S113                    ▼
          ╱──────────────────────────╲
   NO   ╱  DOES HOST VEHICLE HAVE     ╲
◄───────   RIGHT TURN INTENTION?
         ╲                            ╱
          ╲──────────────────────────╱
                        │ YES
S114                    ▼
          ┌──────────────────────────┐
          │     SPECIFY HOST         │
          │   VEHICLE POSITION Pa    │
          └──────────────────────────┘
                        │
S115                    ▼
          ╱──────────────────────────╲
         ╱      HAS HOST              ╲
            VEHICLE ENTERED              NO
          INTERSECTION AREA?          ├────►
         ╲                            ╱
          ╲──────────────────────────╱
                        │ YES
S116                    ▼
          ┌┬────────────────────────┬┐
          ││     INFORMATION        ││
          ││     PRESENTATION       ││
          ││      PROCESSING        ││
          └┴────────────────────────┴┘
                        │
S117                    ▼
          ┌┬────────────────────────┬┐
          ││    ALARM PROCESSING    ││
          └┴────────────────────────┴┘
                        │
S118                    ▼
          ╱──────────────────────────╲
         ╱      HAS HOST              ╲
            VEHICLE PASSED               NO
          INTERSECTION AREA?          ├────►
         ╲                            ╱
          ╲──────────────────────────╱
                        │ YES
                        ▼
                    (  END  )
```

# FIG. 4

```
                    ┌──────────┐
                    │  START   │
                    └──────────┘
                          │
S211 ┌────────────────────▼────────────────────┐
     │      READ VARIOUS KINDS OF               │
     │      CONTROL INFORMATION                 │
     └────────────────────┬────────────────────┘
                          │
S212 ┌────────────────────▼────────────────────┐
     │      SPECIFY VEHICLE                     │
     │      POSITIONS Pa AND Pb                 │
     └────────────────────┬────────────────────┘
                          │
S213              ╱───────▼───────╲
        NO       ╱   IS HOST VEHICLE  ╲
     ◄──────────┤  OUTSIDE PREDICTED  ├
               ╲   COLLISION AREA?   ╱
                ╲───────┬───────╱
                        │ YES
S214 ┌──────────────────▼──────────────────┐
     │     READ VEHICLE SPEED               │
     │     VSPa OF HOST VEHICLE             │
     └──────────────────┬──────────────────┘
                        │
S215            ╱───────▼───────╲      NO
               ┤   VSPa ≤ VSP1?  ├──────►
                ╲───────┬───────╱
                        │ YES
S216 ┌──────────────────▼──────────────────┐
     │   CALCULATE DISTANCE Db              │
     │   BETWEEN ANOTHER VEHICLE            │
     │   AND INTERSECTION                   │
     └──────────────────┬──────────────────┘
                        │
S217 ┌──────────────────▼──────────────────┐
     │     READ VEHICLE SPEED               │
     │     VSPb OF ANOTHER VEHICLE          │
     └──────────────────┬──────────────────┘
                        │
S218 ┌──────────────────▼──────────────────┐
     │    CALCULATE INFORMATION             │
     │    PRESENTATION                      │
     │    DISTANCE Dth1                     │
     └──────────────────┬──────────────────┘
                        │
S219            ╱───────▼───────╲      NO
               ┤    Db ≤ Dth1?   ├──────►
                ╲───────┬───────╱
                        │ YES
S220 ┌──────────────────▼──────────────────┐
     │    PERFORM INFORMATION               │
     │    PRESENTATION                      │
     └──────────────────┬──────────────────┘
                        │
                  ┌─────▼─────┐
                  │    END    │
                  └───────────┘
```

# FIG. 5

START

S311 — READ VARIOUS KINDS OF CONTROL INFORMATION

S312 — SPECIFY VEHICLE POSITIONS Pa AND Pb

S313 — IS HOST VEHICLE INSIDE PREDICTED COLLISION AREA? — NO

YES

S314 — READ VEHICLE SPEED VSPa OF HOST VEHICLE

S315 — VSP1 < VSPa? — NO

YES

S316 — CALCULATE DISTANCE Db BETWEEN ANOTHER VEHICLE AND INTERSECTION

S317 — READ VEHICLE SPEED VSPb OF ANOTHER VEHICLE

S318 — CALCULATE ALARM DISTANCE Dth2

S319 — Db ≤ Dth2? — NO

YES

S320 — PERFORM ALARMING

END

FIG. 6

START

S411 — READ VARIOUS KINDS OF CONTROL INFORMATION

S412 — HAS ANOTHER VEHICLE BEEN DETECTED?
NO
YES

S413 — DOES ANOTHER VEHICLE HAVE RIGHT TURN INTENTION?
NO
YES

S414 — SPECIFY POSITION Pa OF ANOTHER VEHICLE

S415 — HAS ANOTHER VEHICLE ENTERED INTERSECTION AREA?
NO
YES

S416 — INFORMATION PRESENTATION PROCESSING

S417 — ALARM PROCESSING

S418 — HAS ANOTHER VEHICLE PASSED INTERSECTION AREA?
NO
YES

END

FIG. 7

START

S511 — READ VARIOUS KINDS OF CONTROL INFORMATION

S512 — SPECIFY VEHICLE POSITIONS Pa AND Pb

S513 — IS ANOTHER VEHICLE OUTSIDE PREDICTED COLLISION AREA? — NO

YES

S514 — READ VEHICLE SPEED VSPa OF ANOTHER VEHICLE

S515 — VSPa ≤ VSP1? — NO

YES

S516 — CALCULATE DISTANCE Db BETWEEN HOST VEHICLE AND INTERSECTION

S517 — READ VEHICLE SPEED VSPb OF HOST VEHICLE

S518 — CALCULATE INFORMATION PRESENTATION DISTANCE Dth1

S519 — Db ≤ Dth1? — NO

YES

S520 — PERFORM INFORMATION PRESENTATION

END

FIG. 8

START

S611 — READ VARIOUS KINDS OF CONTROL INFORMATION

S612 — SPECIFY VEHICLE POSITIONS Pa AND Pb

S613 — IS ANOTHER VEHICLE INSIDE PREDICTED COLLISION AREA?

NO

S614 — READ VEHICLE SPEED VSPa OF ANOTHER VEHICLE

S615 — VSP1 < VSPa?

NO

YES

YES

S616 — CALCULATE DISTANCE Db BETWEEN HOST VEHICLE AND INTERSECTION

S617 — READ VEHICLE SPEED VSPb OF HOST VEHICLE

S618 — CALCULATE ALARM DISTANCE Dth2

S619 — Db ≤ Dth2?

NO

YES

S620 — PERFORM ALARMING

END

FIG. 9

# FIG. 10

# FIG. 11

FIG. 12

FIG. 13

FIG. 14

FIG. 15

FIG. 16

DAa(141a)

VBT

VBTD1

VBTD

STRAIGHT TRAVELING
VEHICLES!

VBTD2

X

FIG. 17

DAb(141b)

VAT

VATD1

VATD

RIGHT TURNING
VEHICLES!

VATD2

X

FIG. 18

Europäisches
Patentamt

European
Patent Office

Office européen
des brevets

# EUROPEAN SEARCH REPORT

**Application Number**

EP 25 19 7986

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/181823 A1 (STAEHLIN ULRICH [DE] ET AL) 18 July 2013 (2013-07-18) <br> * figures 2-3 * <br> * paragraph [0009] * <br> * paragraph [0039] * <br> * paragraph [0041] * <br> * paragraph [0052] * <br> * paragraph [0063] - paragraph [0065] * <br> * paragraph [0067] - paragraph [0068] * <br> ----- | 1-8 | INV. <br> G08G1/16 <br> B60Q9/00 <br> B60W30/095 |
| X | US 2010/253494 A1 (INOUE HIDEFUMI [JP]) 7 October 2010 (2010-10-07) <br> * figures 3, 7 * <br> * paragraph [0007] * <br> * paragraph [0010] * <br> * paragraph [0056] * <br> * paragraph [0060] - paragraph [0065] * <br> * paragraph [0071] - paragraph [0075] * <br> * paragraph [0083] * <br> * paragraph [0090] - paragraph [0097] * <br> * paragraph [0100] * <br> * paragraph [0109] * <br> ----- | 1-8 | |
| A | US 2021/035447 A1 (URANO HIROMITSU [US] ET AL) 4 February 2021 (2021-02-04) <br> * figure 31 * <br> * paragraph [0051] - paragraph [0066] * <br> * paragraph [0073] * <br> * paragraph [0079] - paragraph [0088] * <br> * paragraph [0094] - paragraph [0097] * <br> ----- | 1-8 | TECHNICAL FIELDS SEARCHED (IPC) <br><br> G08G <br> B60K <br> B60Q <br> B60W |
| A | US 2023/351895 A1 (KADOWAKI HIDEO [JP] ET AL) 2 November 2023 (2023-11-02) <br> * figure 4 * <br> * paragraph [0055] * <br> * paragraph [0060] * <br> ----- | 1-8 | |

The present search report has been drawn up for all claims

| Place of search | Date of completion of the search | Examiner |
|---|---|---|
| The Hague | 29 January 2026 | Fernández Santiago |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 7986

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2026

| Patent document cited in search report | Publication date | Patent family member(s) | Publication date |
|---|---|---|---|
| US 2013181823 A1 | 18-07-2013 | CN 103210434 A | 17-07-2013 |
| | | DE 102010040803 A1 | 15-03-2012 |
| | | EP 2617022 A1 | 24-07-2013 |
| | | KR 20130105857 A | 26-09-2013 |
| | | US 2013181823 A1 | 18-07-2013 |
| | | WO 2012034834 A1 | 22-03-2012 |
| US 2010253494 A1 | 07-10-2010 | CN 101889299 A | 17-11-2010 |
| | | EP 2216764 A1 | 11-08-2010 |
| | | JP 5160564 B2 | 13-03-2013 |
| | | JP WO2009072366 A1 | 21-04-2011 |
| | | US 2010253494 A1 | 07-10-2010 |
| | | WO 2009072366 A1 | 11-06-2009 |
| US 2021035447 A1 | 04-02-2021 | CN 112319466 A | 05-02-2021 |
| | | DE 102020115012 A1 | 04-02-2021 |
| | | JP 7370944 B2 | 30-10-2023 |
| | | JP 2021041913 A | 18-03-2021 |
| | | US 2021035447 A1 | 04-02-2021 |
| US 2023351895 A1 | 02-11-2023 | CN 116895186 A | 17-10-2023 |
| | | JP 7372381 B2 | 31-10-2023 |
| | | JP 2023151446 A | 16-10-2023 |
| | | US 2023351895 A1 | 02-11-2023 |

EPO FORM P0459

For more details about this annex : see Official Journal of the European Patent Office, No. 12/82

**REFERENCES CITED IN THE DESCRIPTION**

**Patent documents cited in the description**

- JP 2009265832 A